# EUROPEAN PATENT SPECIFICATION

(11) **EP 2 870 855 B1**
(45) Date of publication and mention of the grant of the patent: **07.11.2018**
(21) Application number: 14184519.8
(22) Date of filing: 12.09.2014
(51) Int. Cl.: A01D 43/063

(54) **Riding-type mower**
Aufsitzmäher
Tondeuse autoportée

(30) Priority: 11.11.2013 JP 2013233295
(43) Date of publication of application: 13.05.2015
(73) Proprietor: Kubota Corporation, Osaka-shi, Osaka 556-8601 (JP)
(72) Inventor: Nagai, Hiroki, Sakai-City, Osaka 590-0823 (JP); Fujino, Masanori, Sakai-City, Osaka 590-0823 (JP); Yamashita, Nobuyuki, Sakai-City, Osaka 590-0823 (JP); Akai, Yuto, Sakai-City, Osaka 590-0823 (JP)
(74) Representative: Global IP Europe Patentanwaltskanzlei

(56) References cited:
- EP-A1- 2 143 315
- FR-A1- 2 814 330
- FR-A1- 2 859 068
- US-A1- 2009 282 797

## Description

### Technical Field

The present invention relates to a riding-type mower, which mows grass (e.g., turf) while traveling by self-propulsion and stores the mowed grass in a grass container mounted on the body of the mower.

### Background of the Invention

JP2013-039094A (Figs. 1 and 4) discloses a riding-type mower having support frames on the body side, and a grass container which is detachably coupled to the support frame via an elevator linkage mechanism. The elevator linkage mechanism is a four-bar linkage mechanism including a pair of upper links (arms), and a pair of lower links (arms). An end of the left upper link and an end of the left lower link are swingably coupled to a left coupling body, and an end of the right upper link and an end of the right lower link are swingably coupled to a right coupling body. Thus, the elevator linkage mechanism is mounted on the support frames by coupling the left coupling body and the right coupling body to upper end parts of pillar-shaped right-and-left support frames, respectively. The structure in which the upper links are coupled to the lower links by such a pair of right-and-left coupling bodies brings an advantage that the end parts of the upper link and the lower link can move synchronously. However, on the other hand, the structure also brings a trouble that a mounting operation of the links is difficult because both the upper link and the lower link must be coupled simultaneously. Particularly, when the linkage mechanism of the grass container is placed on non-flat or uneven ground surface and is then mounted on the support frames, the locations and posture of the coupling bodies mounting on the support frames tend to be deviated from the actual and corresponding locations and posture of the coupling bodies to be mounted and, thus, it is often difficult to align the locations and posture. Since each coupling body functions as one link of the four-bar linkage, if the mounting height of the coupling body is deviated from the designed location, the coupling body must be adjusted in its inclination with respect to the support frame to obtain the designed motion of other linkages and joints. This deviation may occur in actual situations and, thus, it is often necessary to adjust the height and inclination of the coupling body. This adjustment is burdensome which requires a large force because both the upper link and the lower link are coupled to the coupling body. For this reason, a mechanism in which the principle of leverage is used is needed as disclosed in JP2013-039094A (Fig. 4).

Therefore, structures have been demanded in which the upper links and the lower links of the linkage mechanisms can be mounted on a pair of pillars fixed to the body side as easy as possible even if the differences in height are produced between the pillars and the linkage mechanisms due to the irregularity on the ground surface.

EP 2 143 315 A1 discloses a riding-type mower, comprising: a body frame movably supported by front wheels and rear wheels; a cockpit arranged over the body frame, the cockpit having an operator's seat; a pair of pillars fixed to the body frame, the pair of pillars extending upwardly toward a space above the operator's seat, each of pillars being spaced out from each other along the width direction of the body frame; and a linkage mechanism having a pair of upper links and a pair of lower links, each of the upper links and each of the lower links being detachably and individually attached to one of the pillars; and a grass container held by the linkage mechanism and comprised of a container main body; wherein each of the upper links includes an upper link main body, and each of the lower links includes a lower link main body.

### Summary of the Invention

The present invention provides a riding-type mower according to the appended claim 1. Such a mower comprises a body frame movably supported by front wheels and rear wheels; a cockpit arranged over the body frame, the cockpit having an operator's seat; a pair of pillars fixed to the body frame, the pair of pillars extending upwardly toward a space above the operator's seat, each of pillars being spaced out from each other along the width direction of the body frame; and a linkage mechanism having a pair of upper links and a pair of lower links, each of the upper links and each of the lower links being detachably and individually attached to one of the pillars; and a grass container held by the linkage mechanism.

The width direction of the body frame corresponds to the lateral direction of the mower which substantially perpendicularly crosses the longitudinal direction of the mower.

According to this configuration, since the upper link and the lower link can be individually coupled to one of the pillars, flexibility of the coupling operation improves. Specifically, since a swing axis part of the upper link and a swing axis part of the lower link can be individually coupled to the pillar via respective individual mounting parts. Thus, the upper link and the lower link can be individually coupled to the pillar, and the mounting work turns into light work.

As the upper link and the lower link are configured so as to be individually connectable with the pillars, the posture of the mounting part for mounting each link to the pillar is desirable to be held at least within a predetermined range of suitable posture for mounting the links to the pillars. Therefore, the pair of upper links and the pair of lower links are provided with a posture maintaining mechanism, the posture maintaining mechanism being configured to maintain the pair of upper links and the pair of lower links in a posture to be attached to the pair of pillars.

The mounting parts of the upper links and the lower links to the pillars need to function as fixed fulcrums for causing the pillar to receive part of the weight of the grass container, and also function as one of the swing fulcrums of the linkage mechanism. In addition, the mounting parts must be detachable from the pillars. Since the structure of the mounting parts which must satisfy such requirements is simplified by the separately-provided parts for realizing the above two respective functions, this is convenient. Therefore, according to the invention, each of the upper links includes an upper link main body and an upper mounting bracket, the upper mounting bracket being configured to couple the upper link main body to one of the pillars, the upper mounting bracket having a first coupling part configured to be fixed and be coupled to one of the pillars, and each of the lower links includes a lower link main body and a lower mounting bracket, the lower mounting bracket being configured to couple the lower link main body to one of the pillars, the lower mounting bracket having a first coupling part configured to be fixed and be coupled to one of the pillars.

According to another preferred embodiment of any riding-type mower with the upper mounting bracket and the lower mounting bracket mentioned above, the upper mounting bracket further has a second coupling part configured to be swingably coupled to the upper link main body, and the lower mounting bracket further has a second coupling part configured to be swingably coupled to the lower link main body.

In one of the suitable embodiments of the present invention, each of the upper links includes an upper link main body and an upper mounting bracket provided to an end of the upper link main body on the pillar side for coupling to the pillar, the upper mounting bracket having a first coupling part fixed and coupled to the pillar, and a second coupling part swingably coupled to the upper link main body, and each of the lower links includes a lower link main body and a lower mounting bracket provided to an end of the lower link main body on the pillar side for coupling to the pillar, the lower mounting bracket having a first coupling part fixed and coupled to the pillar, and a second coupling part swingably coupled to the lower link main body.

The upper mounting bracket provided in the end of the upper link main body and the lower mounting bracket provided in the end of the lower link main body are not coupled to each other, and they are separate members. Further, each mounting bracket further includes the first coupling part (fixed fulcrum) fixed and coupled to the pillar. Thereby, the mounting bracket which is the mounting part is lightweight and has a simple structure.

Another preferred embodiment of any riding-type mower mentioned above, each of the first coupling parts of the upper mounting brackets and the lower mounting brackets has a mounting guide having a receiver opening configured to receive one of the pillars, and the posture maintaining mechanism is configured to hold each of the first coupling parts of the upper mounting brackets and the lower mounting brackets such that each receiver opening faces to the corresponding pillar. Thereby, the operation for mounting the upper links to the pillars via the upper mounting brackets becomes smoother. Likewise, the operation for mounting the lower links to the pillars via the lower mounting brackets becomes smoother. The entire linkage mechanism containing the grass container is made to stand appropriately in a state where the mounting brackets are maintained in the mounted postures, and the mower is then moved toward the linkage mechanism. Therefore, a pre-process of the mounting work can be smoothly completed.

Since the mounting bracket itself has a swingable structure with respect to the corresponding link main body, in order to maintain the posture of the first coupling part thereof suitable for mounting to the pillar, the swung position of the mounting bracket with respect to the corresponding link main body may be maintained at a desirable position or within a desirable range.

According to another preferred embodiment of any riding-type mower mentioned above, the posture maintaining mechanism has a stopper, the stopper being configured to limit the swing of each upper mounting bracket and each lower mounting bracket about each swing axis of each upper mounting bracket and each lower mounting bracket with respect to each corresponding upper link main bod and each corresponding lower link main body, respectively. The position of the mounting bracket with respect to the corresponding link main body, which is defined by the stopper, is set such that it becomes the position suitable for mounting to the pillar to easily realize that the posture suitable for the mounting is maintained.

As for the mounting of the linkage mechanisms containing the grass container to the pillars, it is also required to appropriately maintain the posture of the linkage mechanism. For this purpose, it is convenient if the postures and the positions of the upper link main bodies and the lower link main bodies are held at predetermined locations by the stoppers.

According to another preferred embodiment of any riding-type mower mentioned above, the posture maintaining mechanism further includes a lock pin, the lock pin being configured to be inserted to each lower link main body such that each lower link main body is fixed with respect to the grass container.

According to another preferred embodiment of any riding-type mower mentioned above, the posture maintaining mechanism further includes a lock pin, the lock pin being configured to be inserted to each upper link main body such that each upper link main body is fixed with respect to the grass container. Thereby appropriate posture of the linkage mechanism can be maintained.

According to another preferred embodiment of any riding-type mower mentioned above, the posture maintaining mechanism further includes a spacer, the spacer being configured to maintain a gap between the upper link main body and the lower link main body corresponding to each other. Thereby appropriate posture of the linkage mechanism can be maintained.

According to the invention, the posture maintaining mechanism further includes a pair of tension rods, each tension rod being attached to the corresponding lower link main body, each of the tension rods being configured to maintain the corresponding lower link main body in a posture to be attached to the pillars.

As the posture maintaining mechanism includes the tension rods, and if the stoppers of the upper link main bodies are spacers for maintaining the gaps between the upper link main bodies and the lower link main bodies, it is possible to attain advantages that the mounting operation is easy and the manufacturing cost of the stoppers is low.

According to another preferred embodiment of any riding-type mower mentioned above, the mower has a pair of piston cylinders configured to elevate the linkage mechanism attached to the pillars, wherein the pair of tension rods is configured to maintain the pair of piston cylinders at the maximum extended positions thereof. When the tension rods are also used for holding the maximum extended positions of piston cylinders for elevating the linkage mechanisms mounted to the pillars, it is possible to further attain the cost advantage.

As described above, the piston cylinders are typically used for elevating and lowering the linkage mechanisms for lifting the grass container; however, if leaving the piston cylinders to the linkage mechanism side at the time of disengaging the linkage mechanisms from the pillars, an attachable-and-detachable structure of pipings of the piston cylinders is needed. On the other hand, if leaving the piston cylinders to the pillar side at the time of disengagement, the attachable-and-detachable structure of such pipings will no longer be essential.

According to another preferred embodiment of any riding-type mower mentioned above, the mower has a pair of piston cylinders configured to elevate the linkage mechanism attached to the pillars, a first end of each piston cylinder being detachably coupled to the linkage mechanism, and a second end of each piston cylinder being swingably coupled to the body frame or one of the pillars.

If leaving the piston cylinders for elevating and lowering the linkage mechanisms to the body side, one ends of the piston cylinders must be removed from the linkage mechanisms. In such a case, if forces in axial directions of the piston cylinders are acting to the mounting members, such as pins, removal of the mounting members will be difficult. When the piston cylinders and the linkage mechanisms are coupled by support pins and through-holes, it becomes difficult to remove the support pins from the through-holes to cancel the couplings. In order to avoid this problem, it may provide some kind of allowances between the support pins and the through-holes so that the forces in the axial directions acting on the piston cylinders are released.

For example, according to another preferred embodiment of any riding-type mower mentioned above, the pair of piston cylinders are configured such that the first end of each piston cylinder is detachably and swingably coupled to the linkage mechanisms via a first support pin, and the second end of each piston cylinder is swingably coupled to the body frame or the pillars via a second support pin, the pair of piston cylinders further including an allowing mechanism configured to allow positional changes of the second support pin. Easy and effective examples of such allowing mechanisms include the through-hole into which the second support pins are inserted, which is used as releasing guide holes which can release the second support pins.

### Brief Description of the Drawings

The present disclosure is illustrated by way of example and not by way of limitation in the figures of the accompanying drawings, in which the like reference numerals indicate like elements and in which:
Fig. 1 is a schematic view illustrating a fundamental configuration of a riding-type mower according to the present invention;
Fig. 2 is a side view illustrating the entire configuration of a mid-mounted riding-type mower which is one of particular embodiments of the present invention;
Fig. 3 is a plan view of the mid-mounted riding-type mower illustrated in Fig. 2;
Fig. 4 is an enlarged side view of Fig. 2, illustrating a linkage mechanism coupled to pillars, and a grass container;
Fig. 5 is a front view of the mid-mounted riding-type mower illustrated in Fig. 2;
Fig. 6 is a perspective view illustrating a coupling structure between the pillars and upper units, and the pillars and the linkage mechanism, seen from right rear;
Fig. 7 is a cross-sectional view illustrating the coupling structure between the pillar and the upper unit;
Fig. 8 is a side view schematically illustrating a lock device for locking a swung position of the upper unit with respect to the pillar;
Fig. 9 is a side view schematically illustrating the lock device for locking the swung position of the upper unit with respect to the pillar;
Fig. 10 is a side view illustrating the linkage mechanism which is elevated and the grass container at a cut-grass discharging posture;
Fig. 11 is a perspective view illustrating a reverse rotation preventing mechanism provided between the pillar and the upper unit;
Fig. 12 is a side view illustrating the reverse rotation preventing mechanism provided between the pillar and the upper unit;
Fig. 13 is a cross-sectional view illustrating a coupling structure between the pillar and the linkage mechanism;
Fig. 14 is a perspective view illustrating a mounting structure of a base end part of an elevator cylinder to a body frame;
Fig. 15 is a side view illustrating a state immediately before removing the linkage mechanism and the grass container from the pillars;
Fig. 16 is a side view illustrating the linkage mechanism and the grass container which are removed from the pillars;
Fig. 17 is a side view of a zero-turn mower which is an example not covered by the claimed invention;
Fig. 18 is a perspective view of an upper unit of the zero-turn mower; and Fig. 19 is a side view illustrating a linkage mechanism and a grass container of still another example.

### Detailed Description

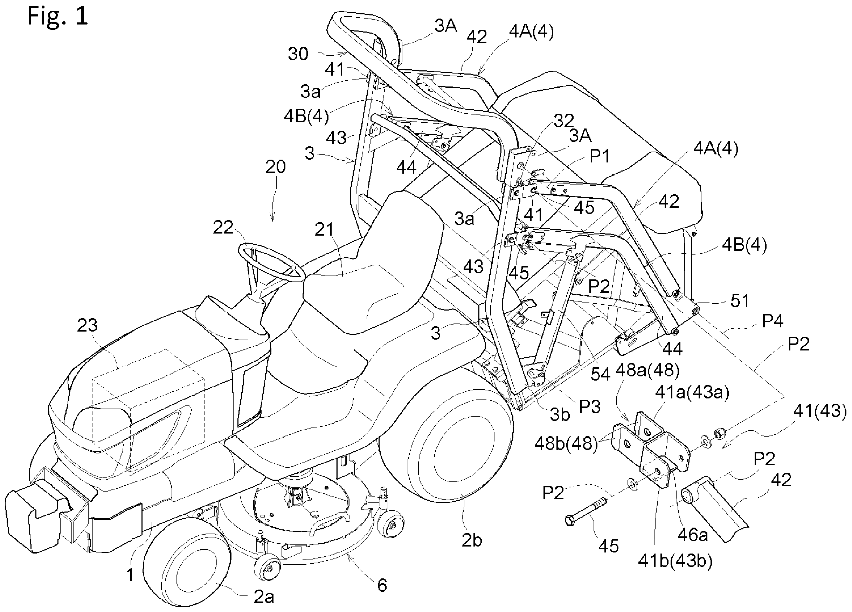

Before describing particular embodiments of a riding-type mower according to the present invention, a fundamental configuration of the riding-type mower by which the present invention is characterized will be described briefly using Fig. 1. Note that, unless otherwise particularly described, the phrase "front-to-rear direction" as used herein refers to a longitudinal direction of a body of the riding-type mower which is in general along a traveling direction of the mower. Likewise, the phrase "lateral direction (transverse direction)" or "right-and-left direction" as used herein refers to a direction horizontally crossing the longitudinal direction of the body frame of the mower. The "lateral direction" corresponds to the width direction of the mower. Likewise, "right" and "left" mean the right side and the left side with respect to the forward-traveling direction of the mower, respectively. Likewise, the phrase "vertical direction" or "height direction" refers to a normal direction to the ground surface or to a body horizontal plane. Therefore, "perpendicular" is not intended to be exact perpendicular angles or right angles, but deviations from the perpendicularity may suitably selected or inevitably produced according to the structural or fabricating natures of the mower and components thereof, which can be appreciated by one of ordinary skill in the art.

In the riding-type mower illustrated in Fig. 1, an engine 23 is disposed in a front part of a body frame 1 which is supported on the ground surface by front wheels 2a and the rear wheels 2b (only left side wheels are illustrated), and a cockpit 20 is disposed in a rear part. A steering wheel 22 and an operator's seat 21 are provided in the cockpit 20. The riding-type mower schematically illustrated in Fig. 1 is a mid-mounted riding-type mower in which a mower unit 6 is suspended from the body frame 1, between the front wheels 2a and the rear wheels 2b. A pair of pillars 3 at the right and left sides extending upwardly is disposed behind the operator's seat 21. Base end parts 3b of the pillars 3 are fixedly supported by the body frame 1. Coupling parts 3A are formed in free end parts 3a which are tip ends of the pillars 3. An upper unit 30 is disposed between inner surfaces of the pair of right-and-left free end parts 3a facing to each other. The upper unit 30 is swingably coupled to each corresponding coupling part 3A about a lateral axis P1 extending in the body lateral direction.

In the example illustrated in Fig. 1, the upper unit 30 has a gate shape which is bent forward at intermediate locations, and it swings about the lateral axis P1 between an extended swung position in which the upper unit 30 extends upwardly and a retracted swung position in which the upper unit 30 extends downwardly. That is, the upper unit 30 has a bending shape in which the central arch part of the upper unit 30 extends above the operator's seat 21 at the extended swung position. The upper unit 30 is located behind the operator's seat 21 at the retracted swung position. Thus, the swing locus of the upper unit 30 is configured to enter into a space defined by a vertical plane passing through the inner surface of the left pillar 3 and a vertical plane passing through the inner surface of the right pillar 3. Therefore, interference of the upper unit 30 with the pillars 3 can be avoided at the time of swinging, and the swing range of the upper unit 30 can be increased. Note that the upper unit 30 does not need to be such an integral structure where a left leg member is coupled to a right leg member by a transverse member, but it may be configured in a two-part structure where the upper unit 30 can be divided into a left member and a right member at the center.

A lock device 32 for locking the upper unit 30 at least at the extended swung position and the retracted swung position is provided between each coupling part 3A and the upper unit 30. One simple example of the lock device 32 is a lock-pin structure in which a lock pin is inserted into holes formed in each coupling part 3A and the upper unit 30.

A linkage mechanism 4 for supporting a grass container 5 and for elevating and lowering the grass container 5 is configured to be attached to an upper area of the pillars 3. The linkage mechanism 4 includes a pair of right-and-left upper links 4A and a pair of right-and-left lower links 4B. The left upper link 4A is configured to be attached to the left pillar 3, and the right upper link 4A is configured to be attached to the right pillar 3. Similarly, the left lower link 4B is configured to be attached to the left pillar 3, and the right lower link 4B is configured to be attached to the right pillar 3. Attachment of each upper link 4A to the corresponding pillar 3 and attachment of each lower link 4B to the corresponding pillar 3 can be performed individually.

When removing the grass container 5 from the riding-type mower, the linkage mechanism 4 is disengaged from the pillars 3 together with the grass container 5. On the contrary, when attaching the grass container 5 to the body frame 1, the linkage mechanism 4 is attached to the pillars 3 together with the grass container 5. Each upper link 4A has an upper mounting bracket 41 configured to be attached to the corresponding pillar 3, and an upper link main body 42 having a function as a swing link. Similarly, each lower link 4B has a lower mounting bracket 43 configured to be attached to the corresponding pillar 3, and a lower link main body 44 having a function as a swing link. In this embodiment, the upper mounting bracket 41 and the lower mounting bracket 43 work in substantially the same way. Both the mounting brackets 41 and 43 are provided with the mounting function to the pillar 3 and the swing fulcrum function with respect to the link main body. Simply, the mounting function can be realized with a securing pin structure, and the swing fulcrum function can be realized with a swing pin structure. In such a case, it is also possible to form the securing pin for mounting and the swing pin for swinging from a single common pin. However, in order to obtain more secured and more stable functions, the pin is preferably divided into the mounting function part and the swing fulcrum function part. In the example illustrated in Fig. 1, the lower mounting bracket 43 is comprised of a mounting part 43a and a swing fulcrum part 43b which are joined to each other. Similarly, the upper mounting bracket 41 is also comprised of a mounting part 41a and a swing fulcrum part 41b.

As enlarged in Fig. 1, each of the mounting parts 41a and 43a is provided with a mounting guide 48 which is comprised of a receiver opening 48a formed corresponding to the cross-sectional shape of the pillar 3, and a receiving guide surface 48b. Thus, the mounting parts 41a and 43a can be smoothly attached to the pillar 3 as the riding-type mower and the linkage mechanism 4 relatively approach toward each other. After the mounting parts 41a and 43a are attached to the pillar 3, the mounting parts 41a and 43a are fixed to the pillar 3 with fastening bolts, lock pins, etc. Instead of the fastening bolts, quick clamps may also be used, for example. The mounting part 41a or 43a may be joined to the swing fulcrum part 41b or 43b, for example, by welding, or may be formed integrally with the swing fulcrum part 41b or 43b. In the example of Fig. 1, the swing fulcrum part 43b of the lower mounting bracket 43 is swingably coupled to one end of the lower link main body 44 with a link pin 45. Similarly, the swing fulcrum part 41b of the upper mounting bracket 41 is swingably coupled to one end of the upper link main body 42 with the link pin 45. The other end of the upper link main body 42 and the other end of the lower link main body 44 are swingably coupled to a container-side link 51 which also functions as a container bracket of the grass container 5.

If the upper mounting bracket 41 (or the lower mounting bracket 43) is configured to be freely rotatable about the lateral axis with respect to the upper link main body 42 (or the lower link main body 44), it rotates, in the free state, downwardly with gravity. Thus, the posture suitable for the upper mounting bracket 41 (or the lower mounting bracket 43) when mounting the upper mounting bracket 41 (or the lower mounting bracket 43) to the pillar 3, cannot be guaranteed. Therefore, a posture maintaining mechanism for maintaining the posture of the upper mounting bracket 41 (or the lower mounting bracket 43) in the free state when mounting the upper mounting bracket 41 (or the lower mounting bracket 43) to the upper link main body 42 (or the lower link main body 44) at the posture suitable for mounting, is needed. Such a posture maintaining mechanism is realizable by using a stopper for limiting the rotation range, for example. Similarly, the upper link main body 42 (or the lower link main body 44) itself is also configured to be freely swingable about a link fulcrum of the lateral axis with respect to the grass container 5 in its free state. Therefore, a posture maintaining mechanism is needed for maintaining the swing posture of the upper link main body 42 and the lower link main body 44 with respect to the grass container 5 at the posture suitable for individually attaching the upper link main body 42 and the lower link main body 44 to the pillar 3. Such a posture maintaining mechanism for the upper link main body 42 and the lower link main body 44 is also realizable with, for example, in a form of stoppers, spacers, position lock pins or any combination of thereof.

When the linkage mechanism 4 described above is attached to the pillars 3, the linkage mechanism 4 and, as a result, the grass container 5 are elevated by lifting the upper link main bodies 42 or the lower link main bodies 44 upwardly about the swing fulcrums of the swing fulcrum parts 41b or the swing fulcrum parts 43b. This lifting operation is performed by elevator cylinders 54, which are typically hydraulic or electric piston cylinders. In the example in Fig. 1, one end sides (the cylinder sides in Fig. 1) of the elevator cylinders 54 are swingably coupled to the body frame 1, and the other end sides (the piston side in Fig. 1) of the elevator cylinders 54 are detachably and swingably coupled to the lower link main bodies 44. Therefore, when the linkage mechanism 4 is removed from the body frame 1 together with the grass container 5, the elevator cylinders 54 will remain at the body frame side. This brings an advantage that, when removing the linkage mechanism 4, a removing operation of hydraulic piping or electric wiring from the elevator cylinders 54 is unnecessary.

### Embodiment 1

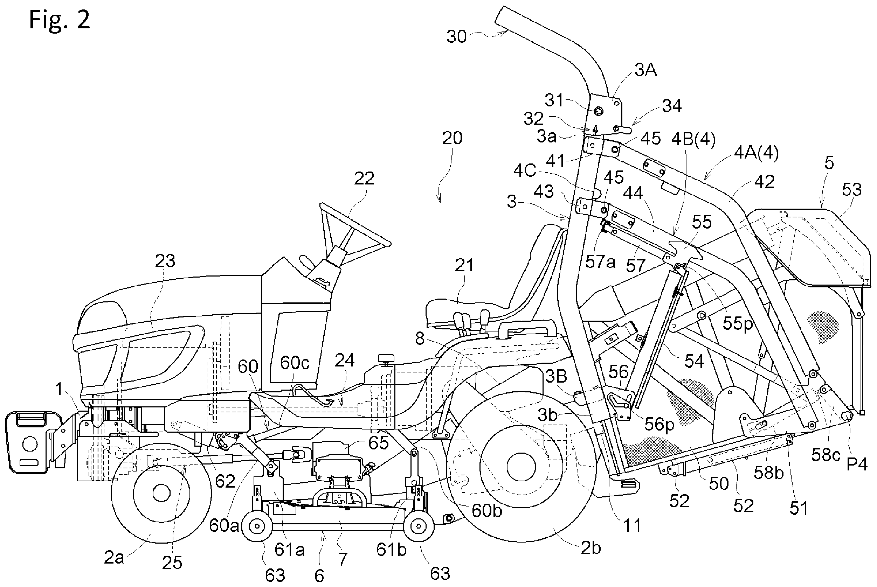

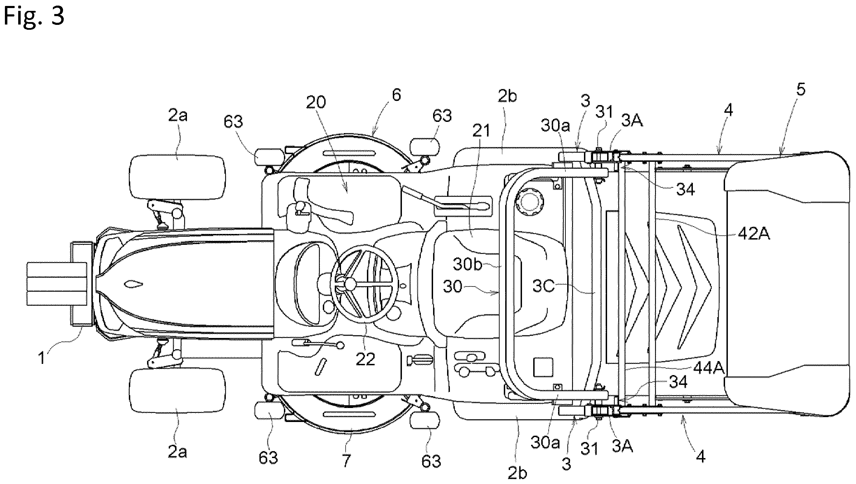

Next, one of particular embodiments of the riding-type mower according to the present invention is described with reference to the accompanying drawings. Fig. 2 is a side view illustrating the entire mid-mounted riding-type mower which is one example of the riding-type mower described above, and Fig. 3 is a plan view of Fig. 2. Although this riding-type mower (hereinafter, simply referred to as "the mower") will be described later in detail, the basic configuration described using Fig. 1 is applied thereto.

As illustrated in Fig. 2, this mower is provided with a pair of right-and-left front wheels 2a which are freely steerable, a pair of right-and-left rear wheels 2b which are driven, and a body frame 1. A cockpit 20 including an operator's seat 21 and a steering wheel 22 is disposed in a rear part of the body frame 1. A mower unit 6 is suspended between the front wheels 2a and the rear wheels 2b, via an elevator linkage mechanism 60 formed in the body frame 1 as a parallel link mechanism.

An engine 23 is disposed in a front part of the body frame 1, and a power transmission mechanism 24 for transmitting power of the engine 23 extends rearwardly from the engine 23. The power transmission mechanism 24 includes a power transmission mechanism for traveling (not illustrated) for transmitting the power to the rear wheels 2b, and a power transmission mechanism for operation (not illustrated) for transmitting the power to the mower unit 6. The traveling power transmission mechanism receives the power from an output shaft of the engine 23 which extends forward with respect to the body, and then transmits the power to the rear wheels 2b via a transmission device disposed below the operator's seat 21. The operation power transmission mechanism receives the power from the output shaft of the engine 23 which extends forward with respect to the body, and then transmits the power to a blade drive unit 65 disposed above a blade housing 7 of the mower unit 6. The mower travels while driving the mower unit 6 to perform a mowing operation for cutting turf and grass.

The elevator linkage mechanism 60 is provided with a pair of right-and-left front links 60a supported by the body frame 1 so as to be vertically swingable, a pair of right-and-left rear links 60b supported by the body frame 1 so as to be vertically swingable, and a pair of right-and-left interlocking links (not illustrated). Tip end parts of the pair of right-and-left front links 60a is coupled to front brackets 61a located in a front part of the blade housing 7 of the mower unit 6. Tip end parts of the pair of right-and-left rear links 60b are coupled to rear brackets 61b located in a rear part of the blade housing 7. Each of the front links 60a is coupled to the rear link 60b on the corresponding side, respectively, by the right-and-left interlocking links. The pair of right-and-left front links 60a are interlockingly coupled to each other via a swing shaft (not illustrated) having one lateral axis. A lift cylinder 62 is interlocked with the left front link 60a. That is, the elevator linkage mechanism 60 is elevated and lowered vertically with respect to the body frame 1 as the front links 60a are swingably displaced by the lift cylinder 62. Thus, the mower unit 6 can be operated between a lowered operating state in which ground-contact gauge wheels 63 supported at front and rear sides of the blade housing 7 contact the ground surface and an elevated non-working state in which all the ground-contact gauge wheels 63 are elevated from the ground surface.

When the mower travels while the mower unit 6 being in the lowered operating state, and a blade unit 73 disposed inside the blade housing 7 of the mower unit 6 is driven to rotate, mowing of grass and/or turf is performed. Here, the cut grass is fed by air flow generated according to the driving of the blade unit 73 into a cut grass conveyance duct 8 through a discharge cover 64 located in an upper part of the blade housing 7. The cut grass conveyance duct 8 extends in the body front-to-rear direction between the right-and-left rear wheels 2b, and is connected with the grass container 5 disposed behind the body frame 1. Thereby, the cut grass mown inside the blade housing 7 is collected in the grass container 5.

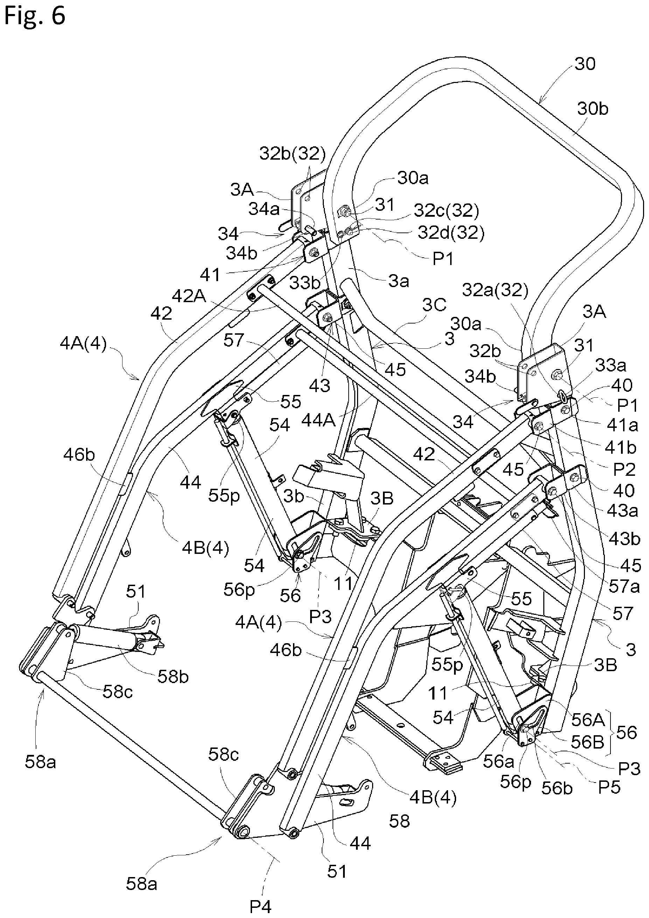

As illustrated in Figs. 3 to 6, the pair of pillars 3 are disposed immediately behind the operator's seat 21 at the left end and the right end of the body frame 1. Each pillar 3 is a pipe having a rectangular cross section, entirely extending upwardly, and is bent rearward approximately in the middle thereof at a bending angle of about 160°. A retaining bracket 3B is formed on the inner surface of the base end part 3b which is a lower end section of each pillar 3. Side bearers 11 are formed at locations corresponding to the retaining brackets 3B, projected respectively from the left end and the right end of the body frame 1 in the body lateral direction. A receiving surface is formed on an upper part of each side bearer 11, and a fixing surface formed in a lower part of the retaining bracket 3B is overlapped with the receiving surface, and they are coupled to each other with bolts. Thus, the pair of pillars 3 is fixed to both the left and right sides of the body frame 1 with high rigidity (see Figs. 1 and 6). The pair of pillars 3 is coupled to each other with a plurality of cross beams 3C extending in the body lateral direction.

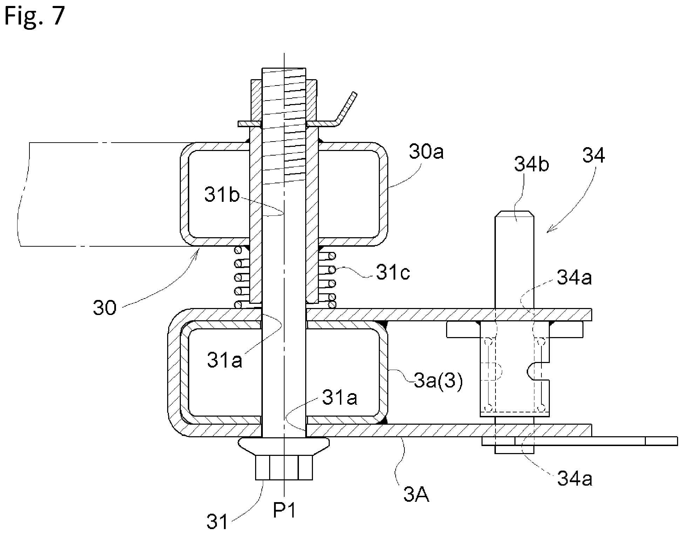

As clearly seen from Fig. 6, the coupling parts 3A coupling the upper unit 30 to the pillars 3 swingably about the lateral axis P1 is formed in free end parts 3a which are upper end sections of the pillars 3. As enlarged in Fig. 7, each coupling part 3A is comprised of a channel-shaped member so that it surrounds three sides of the free end part 3a of the pillar 3 which is the square pipe having a rectangular cross section, and is welded to the free end part 3a. The swing structure of the upper unit 30 with respect to the pillar 3 is realized by coaxially forming through-holes having the lateral axis P1 in the pair of right-and-left coupling parts 3A and both the free end parts 30a of the upper unit 30, and attaching swing shafts 31 to the through-holes. Note that in this embodiment, a spring 31c (see Fig. 7) surrounds each swing shaft 31 so that frictional force acts between the pillar 3 and the upper unit 30. That is, this spring 31c functions as a swing control implement for suppressing the free swing of the upper unit 30 by the frictional force.

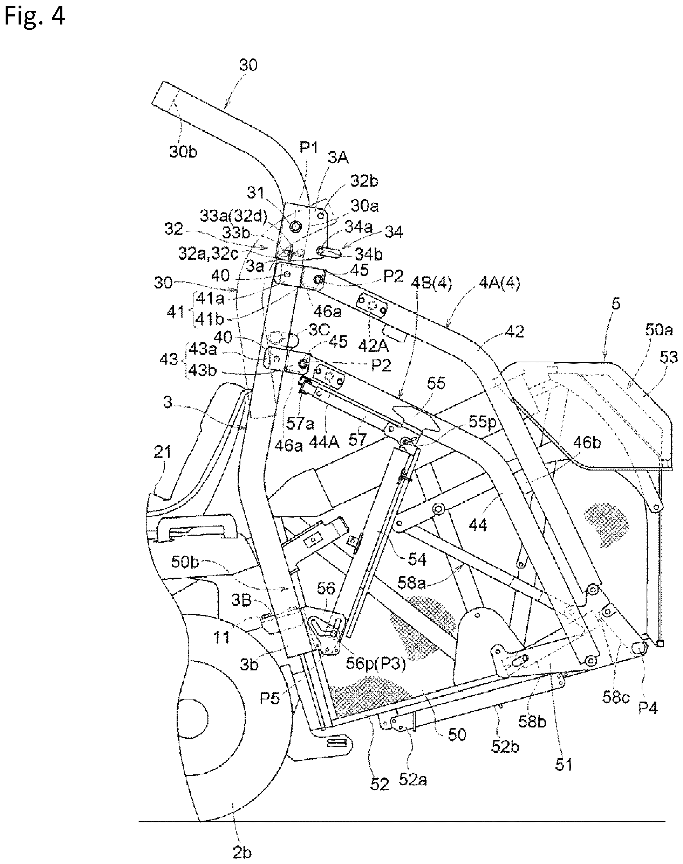

As clearly seen from Fig. 6, the upper unit 30 is a gate-shaped frame having the similar cross-sectional shape to the pillars 3, and its free end parts 30a on both sides are linear, but the upper unit 30 is bent above the linear parts at about 90° and extends forward. That is, the inverted U-shaped frame 30 has a shape which is bent at the leg parts (bent forward in the mounted posture). According to this shape, an arch part 30b of the upper unit 30 reaches above the operator's head sitting on the operator's seat 21 at the swung position of the upper unit 30 where the free end parts 30a on both sides substantially overlap with the free end parts 3a of the pillars 3 (illustrated by solid lines in Fig. 4). In this embodiment, this swung position is referred to as "the extended swung position." From such a position, the operator's seat 21 is moved forward and the upper unit 30 is swung from forward to rearward, the upper unit 30 reaches the swung position where the arch part 30b is located behind the operator's seat 21 (illustrated by dashed dotted lines in Fig. 4). In this embodiment, this swung position is referred to as "the retracted swung position."

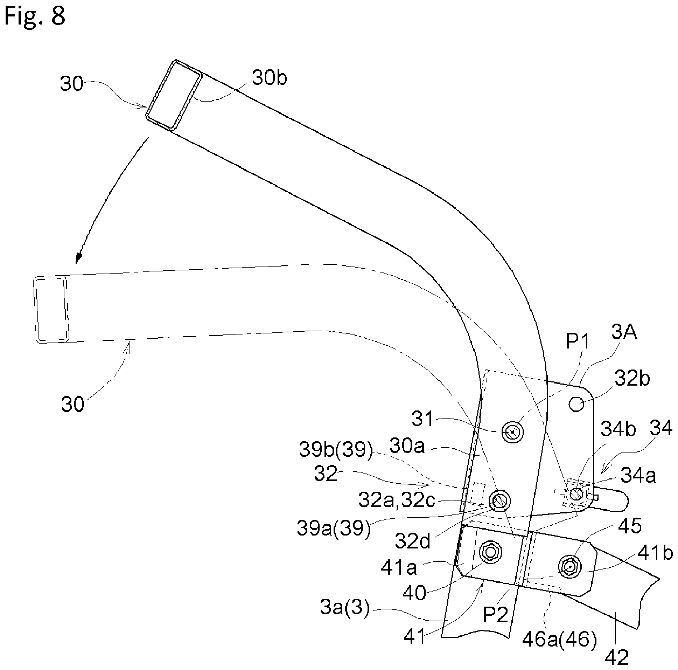

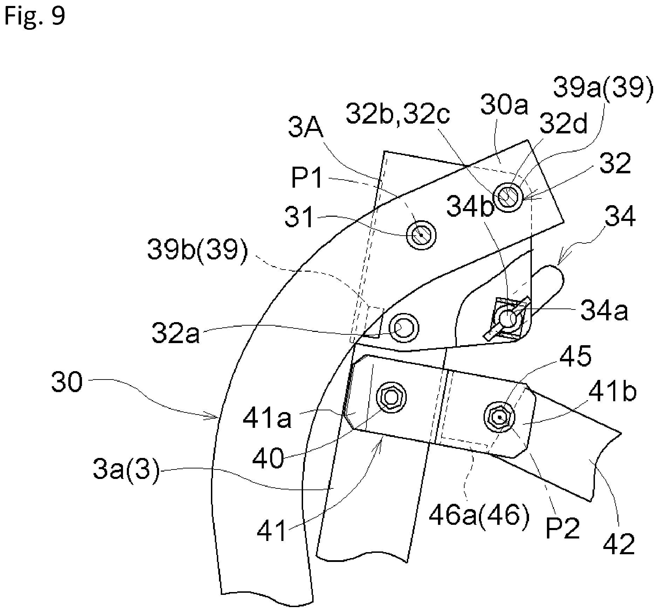

As illustrated in Figs. 6 to 9, the lock device 32 for locking the upper unit 30 at the extended swung position and the retracted swung position described above is formed between each coupling part 3A and the upper unit 30. The lock device 32 adopts a lock-pin lock-hole structure where a first lock hole 32a and a second lock hole 32b are formed in each coupling part 3A, and a third lock hole 32c is further formed in each free end part 3a of the upper unit 30 at a location toward the end part side from the location of the lateral axis P1. The spatial relationship of these lock holes is set so that the first lock hole 32a is located coaxially with the third lock hole 32c at the extended swung position (see Fig. 8), and the second lock hole 32b is located coaxially with the third lock hole 32c at the retracted swung position (see Fig. 9). Therefore, the upper unit 30 is locked at the extended swung position by inserting the lock pins 32d into the first lock holes 32a and the third lock holes 32c at the extended swung position. On the other hand, the upper unit 30 is locked at the retracted swung position by inserting the lock pins 32d into the second lock holes 32b and the third lock holes 32c at the retracted swung position. Although only schematically illustrated in Fig. 6, one end of the lock pin 32d is provided with a ring-shaped grip 33a for easier extracting operation of the pin 32d, and the other end of the lock pin 32d is provided with a retainer pin 33b for fall-off prevention of the pin 32d.

Further in this embodiment, as seen clearly from Figs. 6 and 7, reserve stoppers 34 are provided to prevent the upper unit 30 at the extended swung position from swinging forward even after the lock pins 32d are pulled out (unlocked state). Each reserve stopper 34 is comprised of a stopper pin 34b which is inserted into a through-hole 34a formed in the extended portion of the coupling part 3A, and a tip end thereof projects to a swing locus area of the upper unit 30. That is, if the stopper pins 34b are inserted after returning the upper unit 30 back to the extended swung position, a downward swing of the upper unit 30 can be prevented even in the unlocked state of the lock devices 32 because the tip ends of the stopper pins 34b contact the upper unit 30. Note that, although not illustrated in the drawings because it is a well-known structure, if the spring force is configured to act in the inserting direction of the stopper pin 34b, the stopper pin 34b is configured to be pulled out against the spring force, and the stopper pin 34b is configured to always remain inside the coupling part 3A, the stopper pin 34b will not be lost.

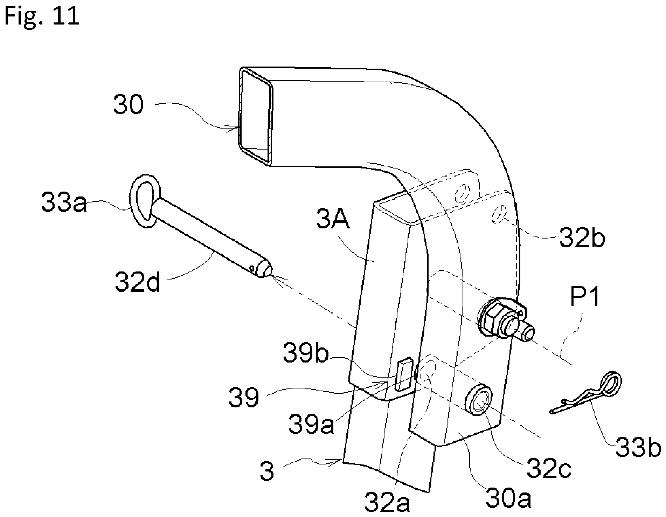

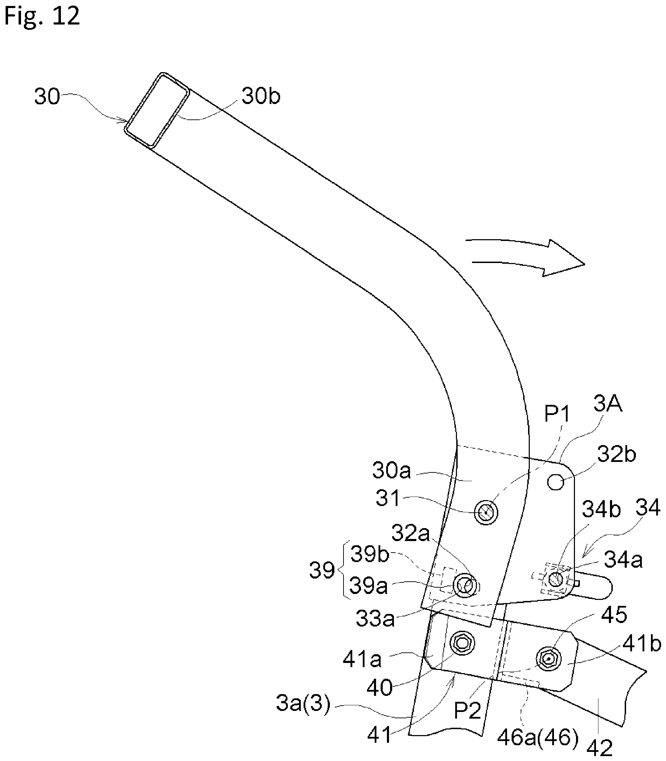

As described above, the upper unit 30 is locked by the lock devices 32 at the extended swung position and the retracted swung position. Further, in the unlocked state of the lock devices 32, the swing from the extended swung position to the retracted swung position is prevented by the reserve stoppers 34, and the swing will not be arrowed unless the reserve stoppers 34 are disengaged. A reverse rotation preventing mechanism 39 is provided between each pillar 3 (coupling part 3A) and the upper unit 30. The reverse rotation preventing mechanism 39 has a function for preventing that the upper unit 30 at the extended swung position swings in the opposite direction from the swing direction from the extended swung position to the retracted swung position. As clearly seen from Figs. 11 and 12, each reverse rotation preventing mechanism 39 in this embodiment is comprised of a collar member 39a and a stopper member 39b. The collar member 39a has a through-hole through which the lock pin 32d is inserted, is disposed between the coupling part 3A and the upper unit 30, and is fixed to the upper unit 30. Each stopper members 39b is fixed to the coupling part 3A at a position where the swing of the upper unit 30 is prevented by contacting the collar member 39a when the upper unit 30 swings in the opposite direction from the swing direction from the extended swung position to the retracted swung position. Of course, the collar members 39a may be fixed to the coupling parts 3A, and the stopper members 39b may be fixed to the upper unit 30. As for the reverse rotation preventing mechanism 39, a simple configuration in which the stopper members 39b are located within the swing locus of the upper unit 30 in the opposite direction from the extended swung position, and is disposed so as to prevent the swing of of the upper unit 30, may be adopted.

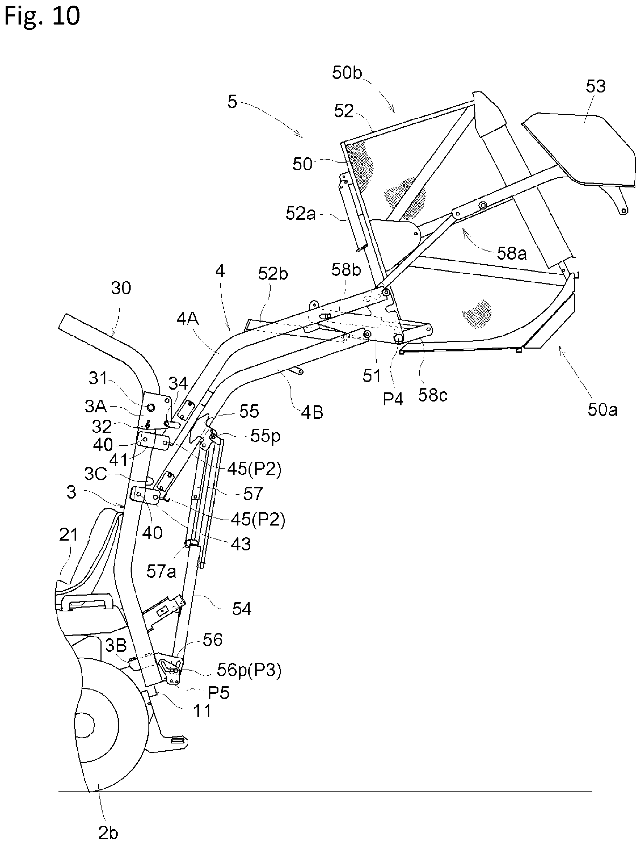

As illustrated in Fig. 4, the linkage mechanism 4 is detachably attached to the upper parts of the pair of pillars 3. The grass container 5 is supported by the linkage mechanisms 4. The linkage mechanism 4 couples an upper end part of each pillar 3 to a bottom end part of the grass container 5 on the rear end side. The hydraulic elevator cylinder 54 is disposed as a piston cylinder for elevating the linkage mechanism 4 so that the hydraulic elevator cylinders 54 extend both right-and-left sides of the grass container 5. A pair of right-and-left dumping cylinders 58b each comprised of a hydraulic cylinder is disposed below the grass container 5 on the rear end side. Further, a dumping linkage mechanism 58a is disposed at both sides of the grass container 5, which interlocks with the dumping cylinders 58b and turns the grass container 5 upside down by the telescopic motion of the dumping cylinders 58b. Fig. 10 illustrates the linkage mechanism 4 which is elevated, and the grass container 5 in the grass discharging posture.

As understood from Figs. 4 and 6, the linkage mechanism 4 includes an upper link 4A and a lower link 4B at each of right and left sides with respect to width direction of the mower body, and a container-side link 51. The container-side link 51 functions as a coupling link which couples the upper link 4A to the lower link 4B with a predetermined gap, and also functions as a container bracket of the grass container 5, which is a rear end frame of the grass container 5.

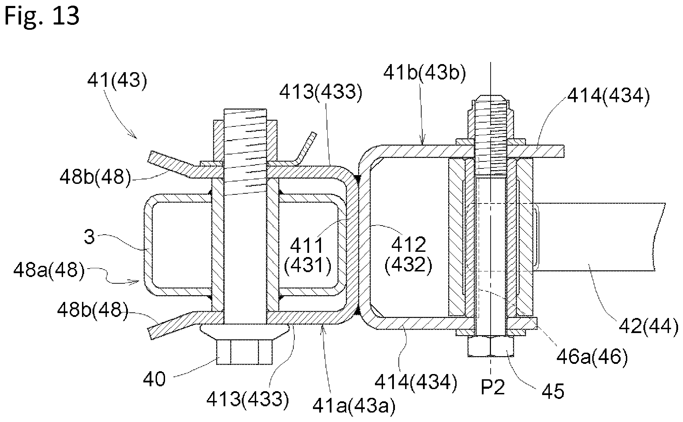

As illustrated in Fig. 6, the upper link 4A is comprised of the upper mounting bracket 41 and the upper link main body 42, and the lower link 4B is comprised of the lower mounting bracket 43 and the lower link main body 44. In this embodiment, the pair of upper link main bodies 42 is coupled to each other by a coupling member 42A, and the pair of lower link main bodies 44 is coupled to each other by a coupling member 44A. However, the coupling member 42A and the coupling member 44A may be omitted. As well understood from Fig. 11, each upper mounting bracket 41 is provided with a mounting part 41a and a swing fulcrum part 41b, and each lower mounting bracket 43 is provided with a mounting part 43a and a swing fulcrum part 43b. As illustrated in Fig. 13, the mounting part 41a and the swing fulcrum part 41b are members having U-shaped cross sections comprised of bottom plates 411 and 412, and side plates 413 and 414 which stand from both ends of the bottom plates 411 and 412, respectively, and the bottom plates 411 and 412 are joined to each other by welding, etc. Similarly, the mounting part 43a and the swing fulcrum part 43b are members having U-shaped cross sections comprised of bottom plates 431 and 432, and side plates 433 and 434 which stand from both ends of the bottom plates 431 and 432, respectively, and the bottom plates 431 and 432 are joined to each other by welding, etc. The mounting parts 41a and 43a are individually detachably mounted to the pillar 3, and the swing fulcrum parts 41b and 43b are swingably coupled to the corresponding link main bodies (the upper link main bodies 42 or the lower link main bodies 44).

Since the upper mounting bracket 41 and the lower mounting bracket 43 have substantially the same shape, although the upper mounting bracket 41 represents the brackets in the following detailed description, this description can also be applied to the lower mounting bracket 43. A through-hole having a common link swing axis P2 is formed in the side plate 414 of the swing fulcrum part 41b and the upper link main body 42, and a link pin 45 is inserted into the through-hole. Receiving guide surfaces 48b which are tip end sections of the pair of right-and-left side plates 413 of the mounting part 41a open outwardly, and they function as mounting guides 48 by which each pillar 3 enters between the side plates 413. When attaching the linkage mechanism 4 including the grass container 5, each mounting part 41a is individually inserted into the pillar 3 so that a rear surface of the pillar 3 contacts with the bottom plate 431 of each mounting part 41a. Each mounting part 43a is fixed to the pillar 3 by inserting the securing pin 40 into the through-hole formed in the pillar 3 and the through-hole formed in the side plates 433, which are aligned coaxially in such a state.

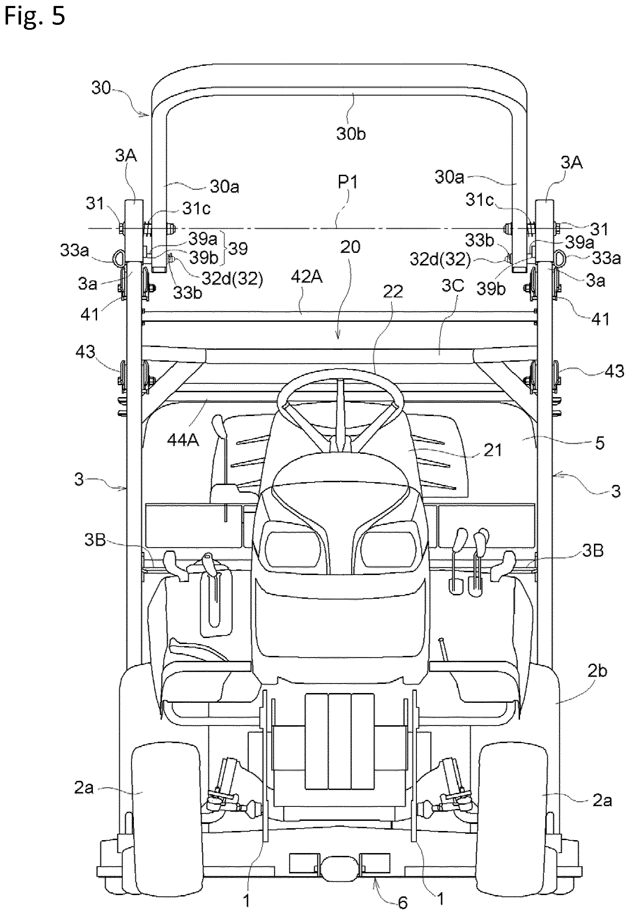

As clearly seen from Figs. 5 and 6, the spatial relationship between each pillar 3, and the corresponding upper link 4A and the corresponding lower link 4B in the plan view is such that the center of the pillar 3 in the body width direction is aligned or substantially aligned with the center of the upper link 4A and the lower link 4B. Describing in more detail, in this embodiment, the longitudinally-extending center line of the upper mounting bracket 41 is aligned with the longitudinally-extending center line of the upper link main body 42, and the longitudinally-extending center lines intersect with a longitudinally-extending center line of the pillar 3. Similarly, the longitudinally-extending center line of the lower mounting bracket 43 is aligned with the longitudinally-extending center line of the lower link main body 44, and the longitudinally-extending center lines intersect with the longitudinally-extending center line of the pillar 3. With such a configuration, the widths of the upper link main body 42 and the lower link main body 44 in the body lateral direction fall within the width of the pillar 3 in the body lateral direction in the plan view.

As described above, the upper mounting bracket 41 is configured to rotate about the link swing axis P2 with respect to the upper link main body 42. For this reason, when the front half of the mower 1, 3 and 20 travels rearwardly toward the linkage mechanism 4 independently standing with the grass container 5, and the pillars 3 are inserted into the mounting parts 43a, it is important to appropriately maintain the posture of the mounting parts 41a so that the U-shaped openings of the mounting parts 41a faces to the pillars 3. In order to realize this appropriate posture of the mounting parts 41a against the pillars 3, the postures of the upper link main bodies 42 and the lower link main bodies 44 in the grass container 5 in the independently standing state, the postures of the upper mounting brackets 41 against the upper link main bodies 42, and the postures of the lower mounting brackets 43 against the lower link main bodies 44 must be maintained within a tolerable range. A member for maintaining such a mounting posture is referred to as "the posture maintaining mechanism 46." In this embodiment, as illustrated in Fig. 4, a swing prevention member 46a formed from a plate member (stopper plate) is arranged on each of lower surfaces of the swing fulcrum parts 41b, 43b to prevent the upper mounting bracket 41 and the lower mounting bracket 43 from swinging downwardly from predetermined positions about the link swing axes P2. In detail, as shown in Figs 4, 8 and 9 for example, an end face of the swing prevention member 46a is configured to contact with a corresponding upper-side end face of the upper link main body 42 or the lower like man body 44. In the contact state, the swing prevention member 46a maintains each upper mounting bracket 41 and each lower mounting bracket 43 in a predetermined mounting posture. The swing prevention member 46a prevents each upper mounting bracket 41 and each lower mounting bracket 43 from swinging downwardly from their positions maintained in the predetermined mounting posture. Of course, the swing prevention members 46a may be provided in lower surfaces of body side end parts of the upper link main body 42 and the lower link main body 44. Such a swing prevention member 46a is one form of the posture maintaining mechanism 46 in the present invention. Further, in a state before attaching the pillar 3 to the linkage mechanism 4, the upper link main body 42 and the lower link main body 44 must also maintain their swing postures with respect to the container-side link 51 within a tolerable range. The posture maintaining mechanism 46 for maintaining this swing postures will be described later.

As clearly seen from Figs. 4 and 6, and Fig. 14 which is an enlarged view, the pair of elevator cylinders 54 swing to elevate and lower the linkage mechanism 4, and each cylinder 54 couples the lower link main body 44 to a base end part 3b of the pillar 3. Specifically, a tip end of a piston of the elevator cylinder 54 is swingably coupled to a first cylinder bracket 55 fixed to the lower link main body 44 via a first support pin 55p. A cylinder end of the elevator cylinder 54 is swingably coupled to a second cylinder bracket 56 fixed to the base end part 3b of the pillar 3 via a second support pin 56p. When the linkage mechanism 4 is removed from the pillar 3 and the grass container 5 is removed from the body frame 1, the elevator cylinder 54 is swung about the second support pin 56p toward the pillar 3 and is held at a rear part of the body frame 1 by removing the first support pin 55p. Since the hydraulic pipings of the elevator cylinders 54 are fixed the body frame 1 side, it is not necessary to remove the hydraulic pipings from the elevator cylinders 54 when swinging and storing the elevator cylinder 54. Note that a service port block of various hydraulic pipings are disposed in rear part area of the body frame 1, for example, on the cross beams of the pillars 3, and, more specifically, in a plane of a cross plate.

A tension rod 57 is swingably provided to each first cylinder bracket 55 about a lateral axis. The tension rod 57 is configured so that, when the piston of the elevator cylinder 54 extends to the maximum, the tension rod 57 swings its tip end downwardly to stop the cylinder end of the elevator cylinder 54, thereby preventing a descent of the piston. In any other cases, the tension rod 57 is swung into a retracted posture in which the tension rod 57 is swung to be oriented along a lower surface of the lower link main body 44, and is held in the posture after the tip end is stopped by a holder provided to the lower link main body 44.

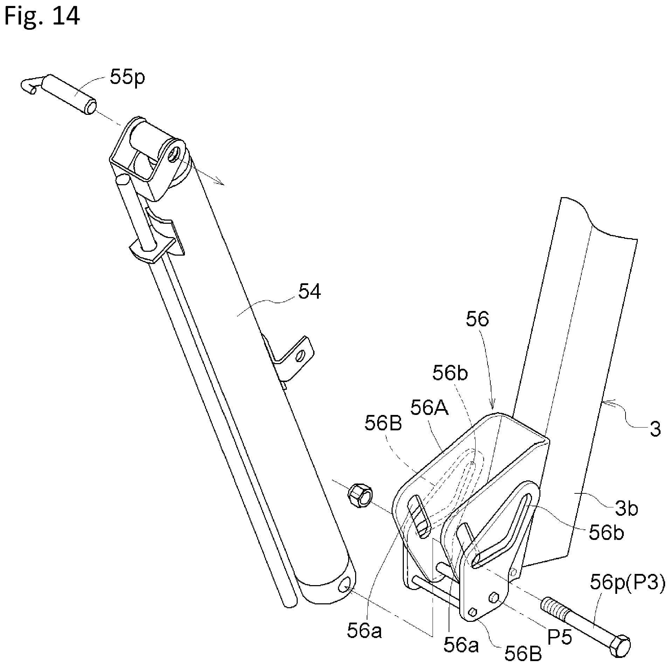

As clearly seen from Fig. 14, the second cylinder bracket 56 has a U-shaped cross section, and is comprised of an inner bracket 56A accepts the cylinder end of the elevator cylinder 54 within an interior space thereof, and outer brackets 56B swingably attached to both side surfaces of the inner bracket 56A about a swing axis P5. A bottom plate of the inner bracket 56A is fixed to the base end part 3b of the pillar 3, and elongated holes 56a through which the second support pin 56p is inserted are formed in the right-and-left side plates standing from edges of the bottom plate of the inner bracket 56A. Each elongated hole 56a is a linear elongated hole extending in the axial direction of the mounted elevator cylinder 54. A substantially C-shaped cam hole 56b is formed in each outer bracket 56B. That is, each cam hole 56b is comprised of a first elongated hole part and a second elongated hole part which are joined together with a certain angle. The first elongated hole part is a curved hole extending along the circumference line of a swing axis P3, and the other elongated hole is a linear hole. At an installation swung position of the outer brackets 56B, the second support pin 56p is located at the end of the curved hole, and the second support pin 56p is held in the curved hole by collaborating with the elongated holes 56a of the inner bracket 56A. From this state, the outer brackets 56B are rotated around the swing pin having the swing axis P5 provided below the cam holes 56b until the second support pin 56p reaches the linear hole. Thereby, the linear holes of the outer brackets 56B overlap with the elongated holes 56a of the inner bracket 56A, and the second support pin 56p becomes movable along the linear hole. When the linkage mechanism 4 is removed from the pillars 3, the elevator cylinders 54 is stored behind the pillars 3 after the couplings of the first support pins 55p are canceled and the elevator cylinders 54 are swung toward the pillars 3 about the second support pins 56p. When canceling the coupling of the first support pin 55p, the elevator cylinder 54 and the first cylinder bracket 55 may be adhered to each other via the first support pin 55p. In such a case, it becomes difficult to remove the first support pin 55p. In this embodiment, since the second support pin 56p becomes movable along the linear hole by the rotation of the outer brackets 56B described above, it becomes easier to remove the first support pin 55p by moving the second support pin 56p in a direction to release the force acting on the first support pin 55p, i.e., by moving the elevator cylinder 54 along the linear hole. That is, this cam hole 56b functions as a releasing guide hole which can displace the second support pin 56p inserted therein, and release the force acting on the second support pin 56p.

When the piston of the elevator cylinder 54 expands and contracts, the linkage mechanism 4 is swung and displaced upwardly and downwardly with respect to the pillar 3, respectively. Thus, the grass container 5 is elevated and lowered between a lowered collecting position (see Fig. 4) at which the grass container 5 is lowered to a rear location of the rear end part of the cut grass conveyance duct 8, and an elevated discharging position (see Fig. 10) at which the grass container 5 is elevated to a rear upper location of the rear end part of the cut grass conveyance duct 8.

The grass container 5 is comprised of a container main body 50 and a container frame 52 which increases the rigidity of the container main body 50. A core member of the container frame 52 is comprised of container brackets which can substantially support the container main body 50 and also functions as the container-side links 51. Therefore, the container brackets are coupled as the container-side links 51 of the linkage mechanism 4 to the lower link main bodies 44 and the upper link main bodies 42 at respective swing fulcrums.

A lid 53 which opens and closes the cut grass discharging port 50a located on the rear end side of the container main body 50 is provided to the grass container 5. The grass container 5 transits to the elevated discharging posture as illustrated in Fig. 10 from the lowered collecting posture as illustrated in Fig. 4 by swing about a swing axis P4. In the elevated discharging posture, the cut grass discharging port 50a is oriented downward, and the cut grass collecting port 50b located on the front end side of the container main body 50 is oriented upward. In the lowered collecting posture, the cut grass collecting port 50b is oriented forward with respect to the body, and the cut grass discharging port 50a is oriented rearward with respect to the body.

In this embodiment, a pair of right-and-left dumping cylinders 58b are provided. The dumping cylinders 58b are coupled to a pair of right-and-left dumping arms 58c swingably provided about the swing axis P4 of a coupling rod which couples the dumping arms 58c. When the dumping arms 58c are swung about the swing axis P4, the grass container 5 also swings about the swing axis P4, and the grass container 5 can be switched between the elevated discharging posture and the lowered collecting posture because of the action of the dumping linkage mechanism 58a. Although the dumping linkage mechanism 58a couples the frame member of the lid 53, the container frame 52, and the container brackets (container-side links 51) at the swing fulcrums, since this is a well-known structure, detailed description thereof is omitted herein.

Fig. 10 is a side view of the grass container 5 in the cut grass discharging state. As illustrated in Fig. 10, when the elevator cylinders 54 are extended, the linkage mechanism 4 is swung upwardly and the grass container 5 is elevated to the elevated discharging position. Further, by extending the dumping cylinders 58b, the dumping arms 58c are swung rearwardly, and the posture of the grass container 5 is transited to the elevated discharging posture. At this time, because of the link action of the dumping linkage mechanism 58a, the lid 53 is switched to an open state, and the cut grass discharging port 50a becomes in an open state. As a result, the cut grass stored in the cut grass container 5 is dropped and discharged from the grass discharging port 50a. From the above state, by a reverse motion, the grass container 5 and the linkage mechanism 4 return to the postures illustrated in Fig. 2, and the cut grass collecting port 50b of the cut grass container 5 is aligned with the rear end part of the cut grass conveyance duct 8 to communicate with the cut grass conveyance duct 8. Thereby, the cut grass fed from the cut grass discharge duct 27 of the mower unit 6 via the cut grass conveyance duct 8 flows into the grass container 5 through the cuts grass collecting port 50b, and is collected into the grass container 5.

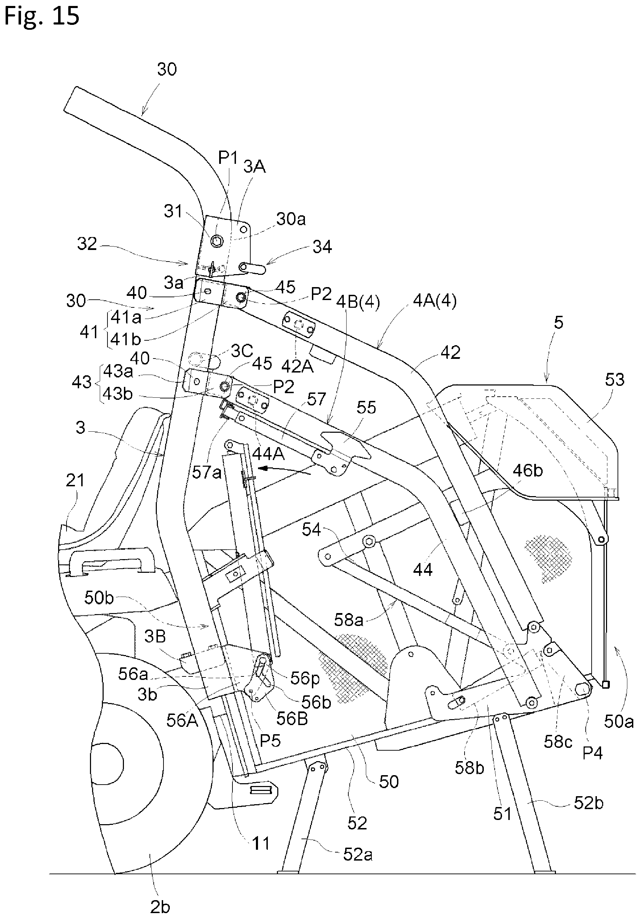

As illustrated in Fig. 15, the grass container 5 can stand alone on the ground surface by deploying a pair of right-and-left front stands 52a folded into a lower front part of the container main body 50 of the grass container 5, and a pair of right-and-left rear stands 52b folded into a lower rear part of the container main body 50. In this stand-alone posture, as described above, when the elevator cylinders 54 are stored on the rear surfaces of the pillars 3, and the tension rods 57 are coupled between the container brackets (container-side links 51) and the lower link main bodies 44, the upper mounting brackets 41 and the lower mounting brackets 43 obtain postures and positions suitable for attaching to the pillars 3.

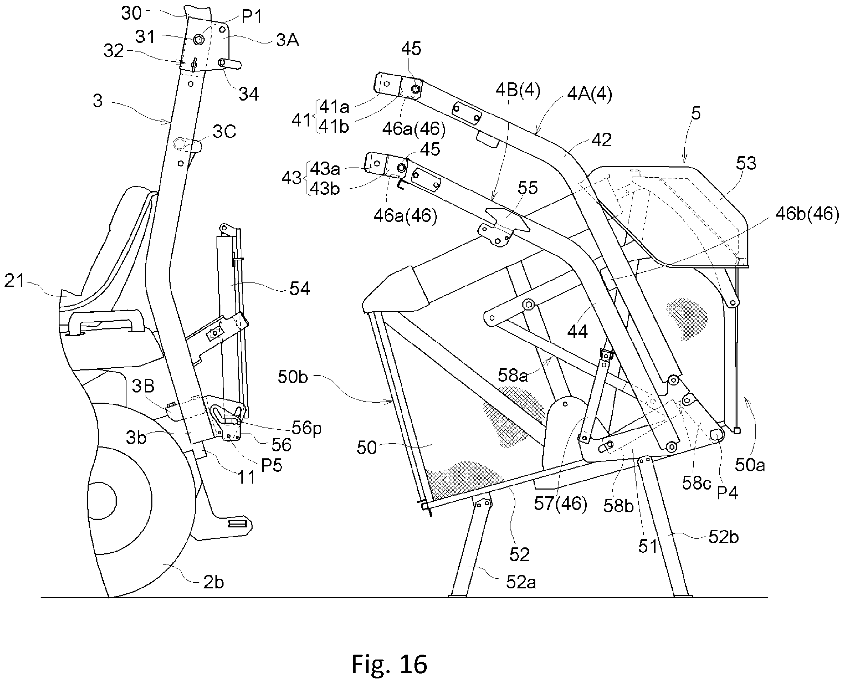

Further, from such a state, as clearly seen from Fig. 16, the tension rods 57 are removed from predetermined locations where the tension rods 57 are held by the lower link main bodies 44, and one ends of the tension rods 57 are attached to the lower link main bodies 44 and the other ends are attached to the container brackets (container-side links 51). Thereby, the lower link main bodies 44 can maintain predetermined postures with respect to the container brackets (container-side links 51). The predetermined postures are appropriate postures for attaching the linkage mechanism 4 to the pillars 3, and, therefore, the tension rods 57 function as a member of the posture maintaining mechanism 46. Spacers 46b are each provided between the lower link main body 44 and the upper link main body 42. The spacer 46b creates a predetermined gap between the lower link main body 44 and the upper link main body 42 of which postures are maintained by the tension rod 57. The predetermined gap creates the appropriate posture of the upper link main body 42 when attaching the linkage mechanism 4 to the pillars 3. Therefore, the spacers 46b also function as a member of the posture maintaining mechanism 46.

From the state illustrated in Fig. 16, in order to attach the linkage mechanism 4 including the grass container 5 to the pillars 3, the mower is reversed to a location where the upper mounting brackets 41 and the lower mounting brackets 43 can be mounted to the pillars 3. Then, in a state where the mounting parts 41a of the upper mounting brackets 41 and the mounting parts 43a of the lower mounting brackets 43 are fitted into the pillars 3, the securing pins 40 are inserted to complete the coupling of the upper links 4A and the lower links 4B to the pillars 3. Further, the elevator cylinders 54 are swung from their storage positions behind the pillars 3, and their piston tip ends are coupled to the first cylinder brackets 55 using the first support pins 55p. Thereby, the coupling of the linkage mechanism 4 to the pillars 3 is completed. When elevator cylinders 54 are expanded, the grass container 5 is elevated, and since the front stands 52a and the rear stands 52b are lifted from the ground surface, the front stands 52a and the rear stands 52b can be folded.

### Other Embodiments

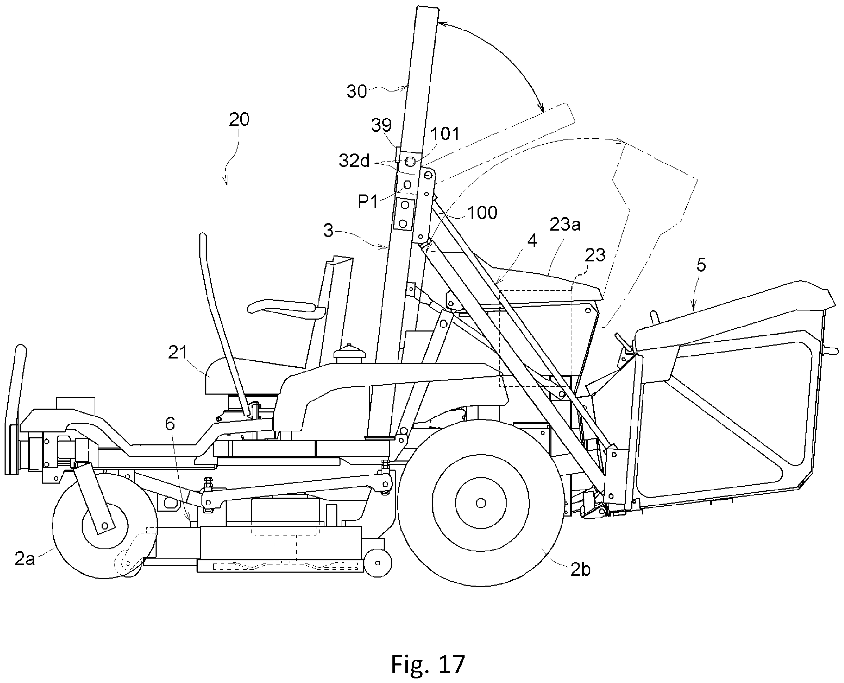

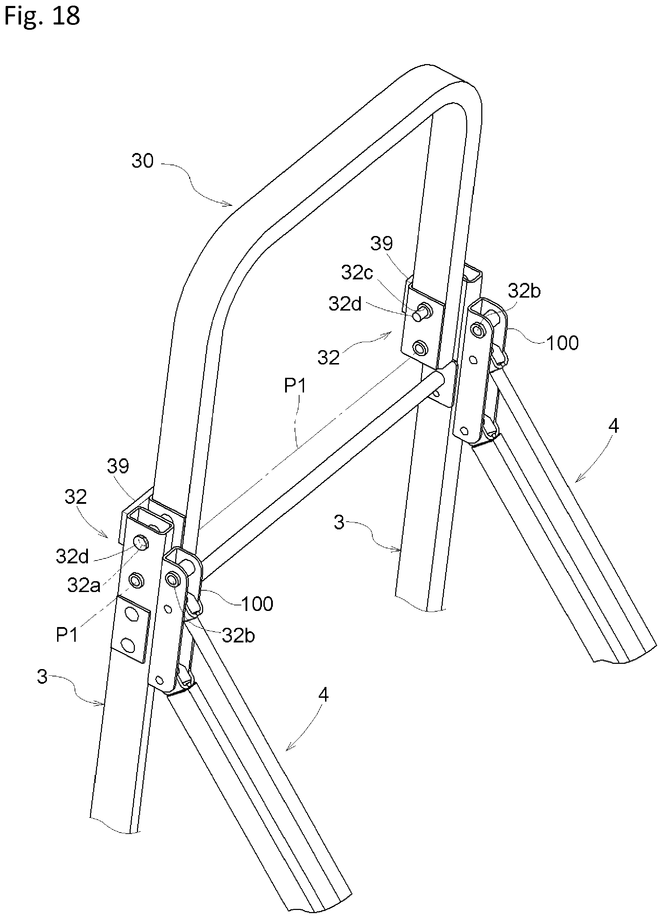

In the embodiment described above, the present invention is applied to the riding-type mower where the engine 23 is disposed in the front part of the body frame 1 and the operator's seat 21 is disposed in the rear part, while the mower unit 6 is disposed between the front wheels 2a and the rear wheels 2b. Of course, the present invention is also applicable to other types of riding-type mower. For example, Figs. 17 and 18 illustrate another example being applied to a riding-type mower which is generally referred to as a "zero-turn mower." In this riding-type mower, the engine 23 is disposed behind the operator's seat 21, and a pair of right-and-left steering rods 20 is provided instead of the steering wheel 22. The pillars 3 are disposed behind the operator's seat 21 similar to the previous embodiment. The upper unit 30 is swingably mounted to upper parts of the pillars 3 about the lateral axis P1 so that it is located between the inside side faces of the pair of pillars 3. In the example illustrated in Figs. 17 and 18, a coupling body 100 which serves as both of the upper mounting bracket 41 and the lower mounting bracket 43, i.e., the coupling body 100 which is coupled to both the upper link 4A and the lower link 4B, is attached to a rear surface of the upper part of each pillar 3. Of course, similar to the embodiment described above, a configuration in which the upper link 4A and the lower link 4B are separately coupled to the pillar 3 using the upper mounting bracket 41 and the lower mounting bracket 43, may be adopted. Since the linkage mechanism 4 is simple in the structure, the upper link 4A and the lower link 4B are integrated by the coupling body 100, and the coupling body 100 serves as both of the upper mounting bracket 41 and the lower mounting bracket 43.

As understood from Fig. 18, the upper unit 30 of this example has a simple gate shape which is formed by bending a single square pipe at two places in the same direction about 90°. The upper unit 30 is located much higher than the head of the operator who sits on the operator's seat so that the leg sections of the upper unit 30 and the pillars 3 draw substantially straight lines (an extended swung position), and this posture is a normal posture of the upper unit 30 when the mower travels (illustrated by solid lines in Fig. 17). The upper unit 30 can be transited into a retracted swung position for avoiding interferes of the upper unit 30 with trees, beams of a barn, etc. by swinging the upper unit 30 rearwardly above the engine 23. The retracted swung position is set so that the upper unit 30 does not barely interfere with an engine hood 23a covering the engine 23 from above even if the hood 23a is opened and closed, and the gap between the upper unit 30 and the hood 23a is set minimum (illustrated by dashed dotted lines in Fig. 17). The locking devices 32 for locking the upper unit 30 at the extended swung position and the retracted swung position are similar to those of the previous embodiment, and adopt the lock-pin lock-hole structure. As illustrated in Fig. 18, in each lock device 32, a first lock hole 32a is formed in the pillar 3, a second lock hole 32b is formed in the coupling body 100, and a third lock hole 32c is formed in the upper unit 30. The spatial relationship of the lock holes is set so that the first lock hole 32a is located coaxially with the third lock hole 32c at the extended swung position and the second lock hole 32b is located coaxially with the third lock hole 32c at the retracted swung position. Therefore, the upper unit 30 is locked at the extended swung position by inserting the lock pins 32d into the first lock holes 32a and the third lock holes 32c at the extended swung position. On the other hand, the upper unit 30 is locked at the retracted swung position by inserting the lock pins 32d into the second lock holes 32b and the third lock holes 32c at the retracted swung position. Further, as illustrated in Fig. 18, stopper members extending over the front surfaces of the pillars 3 and the front surface of the upper unit 30 are provided as the reverse rotation preventing mechanism 39. The stopper members are fixed to the pillars 3, and prevent the swing of the upper unit 30 in the opposite direction from the swing direction from the extended swung position to the retracted swung position by the contact of the stopper members and the upper unit 30. Of course, such stopper members may be fixed to the upper unit 30, the swing of the upper unit 30 in the opposite direction from the swing direction from the extended swung position to the retracted swung position may be prevented by the contact of the stopper members and the pillars 3, and other mechanisms may also be adopted. Further, although not illustrated herein, the reserve stoppers 34 may also be provided in this embodiment.

The various features according to the present disclosure are entirely or partially applicable not only to the riding-type mower described above, but also applicable to other mowers. For example, the features are also applicable to a so-called front-mounted mower in which the mower unit 6 is disposed forward of the front wheels. Further, also for the linkage mechanism 4, the present disclosure is applicable to any other mowers provided with any kinds of linkage mechanism 4 as far as they include the upper links 4A and lower links 4B. A typical linkage mechanism 4 includes a high-dumping linkage mechanism as illustrated in Fig. 10 in which the grass container 5 is elevated high above the operator's seat 21, a low-dumping linkage mechanism in which the grass container 5 is elevated to the same height as the operator's seat 21, a reversal elevator linkage mechanism in which the grass container 5 is elevated while being reversed, a horizontal elevator linkage mechanism in which the grass container 5 is elevated while being translated without changing the posture of the grass container 5, etc.

### Modifications to Various Components

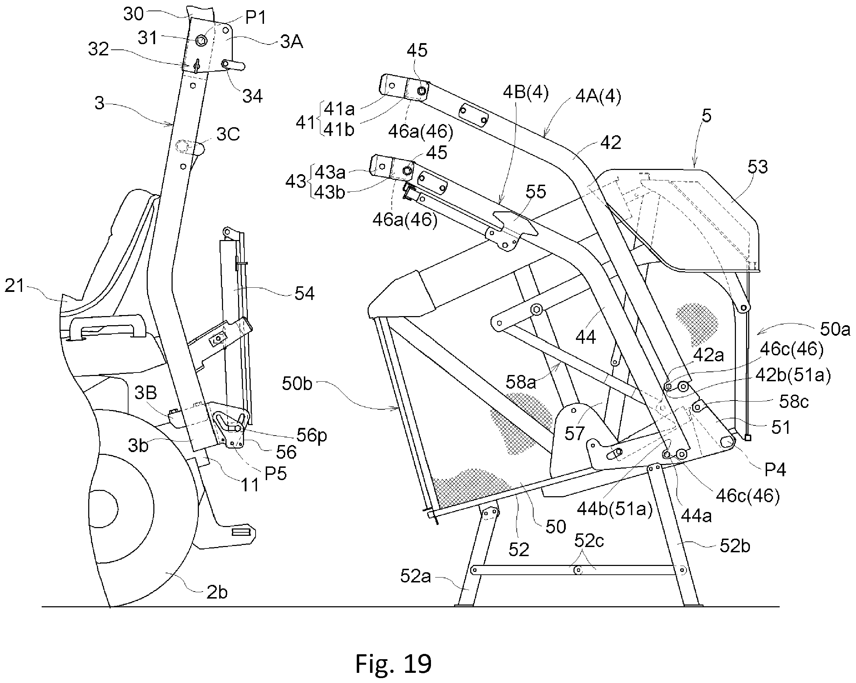

(1) In the embodiments described above, as seen clearly from Fig. 5 and other drawings, the shape and dimensions of the upper unit 30 are designed so that the maximum width of the swing locus of the upper unit 30 in the body lateral direction, i.e., the swing locus about the lateral axis P1 of the upper unit 30, becomes narrower than the distance between the pillars 3. Alternatively, the shape and dimensions of the upper unit 30 may be designed so that the width of the swing locus in the body lateral direction of only the sections of the upper unit 30 opposing to the coupling parts 3A (i.e., free end parts 30a) and the tip end sections of the upper unit 30 (i.e., parts away from the lateral axis PI) become narrower than the distance between the pillars 3. That is, even when the upper unit 30 has bulged parts which bulge outwardly in the body lateral direction between the free end parts 30a and the arch part 30b, since the arch part 30b as the tip end of the upper unit 30 can pass between the pillars 3, the retracted swung position can be selected in order to effectively use the space.
(2) In the embodiments described above, although the pillars 3 and the upper unit 30 are manufactured from square pipes having rectangular cross sections, they may be manufactured from pipes having other cross sections or other profile materials. Further, the pillars 3 and the upper unit 30 may be manufactured from members having different cross-sectional shapes and/or different materials.
(3) In the embodiments described above, although the stands for allowing the grass container 5 to stand alone are comprised of the front stands 52a and the rear stands 52b which are separately foldable, a structure may be adopted in which the front stands 52a and the rear stands 52b are swingable about lateral axes, the front stands 52a are respectively coupled to the rear stands 52b by coupling bars 52c which are bendable at the centers to allow the front stands 52a and the rear stands 52b to be interlockingly folded, as illustrated in Fig. 19. Alternatively, a configuration may be adopted in which a suitable pedestal is provided between the ground surface and the grass container 5 to allow the grass container 5 to stand alone.
(4) In the embodiments described above, the tension rods 57 are used as the posture maintaining mechanism 46 for maintaining the mounted postures of the upper links 4A and the lower links 4B to the pillars 3, and the spacers 46b are used as the posture maintaining mechanism 46 for maintaining the mounted postures of the upper links 4A to the pillars 3. Alternatively, as illustrated in Fig. 19, auxiliary brackets 42a and 44a formed with lock holes 42b and 44b may be provided to the upper link main body 42 and the lower link main body 44, respectively, and lock pins 46c may be inserted into the lock holes 42b and 44b, and into lock holes 51a formed in the container brackets (container-side links 51). Thus, the upper link main bodies 42 and the lower link main bodies 44 can be maintained in the appropriate mounted postures. Further, the posture maintaining mechanism 46 in which the posture maintenance using the lock pins, and the posture maintenance by the tension rods 57 and the spacers of the previous embodiment are combined, is also possible.
(5) In the embodiments described above, the posture maintaining mechanism 46 for maintaining the postures of the upper mounting brackets 41 and the lower mounting brackets 43 with respect to the upper link main bodies 42 and the lower link main bodies 44, respectively, are realized by the swing prevention members 46a which are plate members respectively provided to the upper link main bodies 42 or the lower link main bodies 44. Alternatively, the swing prevention members 46a may be provided to the upper mounting brackets 41 or the lower mounting brackets 43. Alternatively, the swing prevention members may be provided to the link pins 45 as the posture maintaining mechanism 46. Alternatively, lock-pin structures may be realized in order to maintain the posture of the upper mounting brackets 41 with respect to the upper link main bodies 42, and/or the posture of the lower mounting brackets 43 with respect to the lower link main bodies 44.
(6) In the embodiments described above, although the pair of right-and-left dumping cylinders 58b are provided, only one dumping cylinder may be provided. Such a single dumping cylinder 58b is coupled to a dumping arm swingably provided about the swing axis P4 below an intermediate part of the grass container 5 in the lateral direction. When swinging the dumping arm 58c about the swing axis P4, the grass container 5 is also swung about the swing axis P4, and the grass container 5 is switched between the elevated discharging posture and the lowered collecting posture by the action of the dumping linkage mechanism 58a. The single dumping cylinder 58b and the single dumping arm are stored in a recessed portion formed in the bottom plate of the container main body 50, when the grass container 5 is switched to the lowered collecting posture.

The present invention is applicable to the riding-type mower provided with the engine, the pillars, the linkage mechanism, and the grass container.

In the foregoing specification and specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits and advantages, solutions to problems, and any element(s) that may cause any benefit, advantage and/or solution to occur or become more pronounced are not to be construed as a critical, required and/or essential features or elements of any or all the claims. The invention is defined solely by the appended claims.

## Claims

1. A riding-type mower, comprising:
a body frame (1) movably supported by front wheels (2a) and rear wheels (2b);
a cockpit (20) arranged over the body frame (1), the cockpit (20) having an operator's seat (21);
a pair of pillars (3) fixed to the body frame (1), the pair of pillars (3) extending upwardly toward a space above the operator's seat (21), each of pillars (3) being spaced out from each other along the width direction of the body frame (1); and
a linkage mechanism (4) having a pair of upper links (4A) and a pair of lower links (4B), each of the upper links (4A) and each of the lower links (4B) being detachably and individually attached to one of the pillars (3); and
a grass container (5) held by the linkage mechanism (4) and comprised of a container main body (50),
wherein
each of the upper links (4A) includes an upper link main body (42), and
each of the lower links (4B) includes a lower link main body (44),
**characterized in that**:
each of the upper links (4A) further includes an upper mounting bracket (41);
the upper mounting bracket (41) being configured to couple the upper link main body (42) to one of the pillars (3),
the upper mounting bracket (41) having a first coupling part (41a) configured to be fixed and be coupled to one of the pillars (3);
each of the lower links (4B) further includes a lower mounting bracket (43);
the lower mounting bracket (43) being configured to couple the lower link main body (44) to one of the pillars (3),
the lower mounting bracket (43) having a first coupling part (43a) configured to be fixed and be coupled to one of the pillars (3);
the pair of upper links (4A) and the pair of lower links (4B) are provided with a posture maintaining mechanism (46), the posture maintaining mechanism (46) being configured to maintain the pair of upper links (4A) and the pair of lower links (4B) in a posture to be attached to the pair of pillars (3); and
the posture maintaining mechanism (46) includes a pair of tension rods (57), each tension rod (57) being attached to the corresponding lower link main body (44),
the tension rods (57) being configured to be removed from the predetermined locations where the tension rods (57) are held by the lower link main bodies (44), such that first ends of the tension rods (57) are attached to the lower link main bodies (44) and the other ends are attached to container brackets or container-side links (51) of the container (5), the container brackets substantially supporting the container main body and functioning as the container-side links, each of the container-side links functioning as each of the container brackets,
each of the tension rods (57) being configured to maintain the corresponding lower link main body (44) in a posture to be attached to the pillars (3).

2. The riding-type mower of claim 1, wherein
each of the first coupling parts (41a, 43a) of the upper mounting brackets (41) and the lower mounting brackets (43) has a mounting guide (48) having a receiver opening configured to receive one of the pillars (3), and
the posture maintaining mechanism (46) is configured to hold each of the first coupling parts (41a, 43a) of the upper mounting brackets (41) and the lower mounting brackets (43) such that each receiver opening faces to the corresponding pillar (3).

3. The riding-type mower according to claim 1 or 2, wherein
the upper mounting bracket (41) has a second coupling part (41b) configured to be swingably coupled to the upper link main body (42),
the lower mounting bracket (43) has a second coupling part (43b) configured to be swingably coupled to the lower link main body (44), and
the posture maintaining mechanism (46) has a stopper (46a), the stopper (46a) being configured to limit the swing of each upper mounting bracket (41) and each lower mounting bracket (43) about each swing axis of each upper mounting bracket (41) and each lower mounting bracket (43) with respect to each corresponding upper link main body (42) and each corresponding lower link main body (44), respectively.

4. The riding-type mower according to claim 3, wherein the posture maintaining mechanism (46) further includes a lock pin (46c), the lock pin (46c) being configured to be inserted to each lower link main body (44) such that each lower link main body (44) is fixed with respect to the grass container (5).

5. The riding-type mower according to claim 3 or 4, wherein the posture maintaining mechanism (46) further includes a lock pin (46c), the lock pin (46c) being configured to be inserted to each upper link main body (42) such that each upper link main body (42) is fixed with respect to the grass container (5).

6. The riding-type mower according to any one of claims 3 to 5, wherein the posture maintaining mechanism (46) further includes a spacer (46b), the spacer (46b) being configured to maintain a gap between the upper link main body (42) and the lower link main body (44) corresponding to each other.

7. The riding-type mower according to any one of claims 1 to 6, further comprising a pair of piston cylinders (54) configured to elevate the linkage mechanism (4) attached to the pillars (3),
wherein the pair of tension rods (57) is configured to maintain the pair of piston cylinders (54) at the maximum extended positions thereof.

8. The riding-type mower according to any one of claims 1 to 7, further comprising a pair of piston cylinders (54) configured to elevate the linkage mechanism (4) attached to the pillars (3), a first end of each piston cylinder (54) being detachably coupled to the linkage mechanism (4), and a second end of each piston cylinder (54) being swingably coupled to the body frame (1) or one of the pillars (3).

9. The riding-type mower according to claim 8, wherein the pair of piston cylinders (54) are configured such that the first end of each piston cylinder (54) is detachably and swingably coupled to the linkage mechanisms (4) via a first support pin (55p), and the second end of each piston cylinder (54) is swingably coupled to the body frame (1) or the pillars (3) via a second support pin (56p), the pair of piston cylinders (54) further including an allowing mechanism (56a, 56b) configured to allow positional changes of the second support pin (56p).

## Patentansprüche

1. Aufsitzmäher, mit:
einem Fahrzeugaufbaurahmen (1), der beweglich durch Vorderräder (2a) und Hinterräder (2b) gestützt wird;
einem Führerstand (20), der über dem Fahrzeugaufbaurahmen (1) angeordnet ist, wobei der Führerstand (20) einen Fahrersitz (21) aufweist;
einem Säulenpaar (3), das am Fahrzeugaufbaurahmen (1) befestigt ist, wobei sich das Säulenpaar (3) nach oben zu einem Raum über dem Fahrersitz (21) erstreckt, wobei jede der Säulen (3) zueinander längs der Breitenrichtung des Fahrzeugaufbaurahmens (1) beabstandet ist; und
einem Verbindungsmechanismus (4), der ein Paar von oberen Verbindungen (4A) und ein Paar von unteren Verbindungen (4B) aufweist, wobei jede der oberen Verbindungen (4A) und jede der unteren Verbindungen (4B) abnehmbar und einzeln an einer der Säulen (3) angebracht ist; und
einem Grasbehälter (5), der durch den Verbindungsmechanismus (4) gehalten wird und aus einem Behälterhauptkörper (50) besteht,
wobei
jede der oberen Verbindungen (4A) einen oberen Verbindungshauptkörper (42) aufweist und
jede der unteren Verbindungen (4B) einen unteren Verbindungshauptkörper (44) aufweist,
**dadurch gekennzeichnet, dass**:
jeder der oberen Verbindungen (4A) ferner einen oberen Befestigungswinkel (41) aufweist;
wobei der obere Befestigungswinkel (41) konfiguriert ist, den oberen Verbindungshauptkörper (42) mit einer der Säulen (3) zu koppeln,
wobei der obere Befestigungswinkel (41) einen ersten Kopplungsteil (41a) aufweist, der konfiguriert ist, befestigt und mit einer der Säulen (3) gekoppelt zu werden; jede der unteren Verbindungen (4B) ferner einen unteren Befestigungswinkel (43) aufweist;
wobei der untere Befestigungswinkel (43) konfiguriert ist, den unteren Verbindungshauptkörper (44) mit einer der Säulen (3) zu koppeln,
wobei der untere Befestigungswinkel (43) einen ersten Kopplungsteil (43a) aufweist, der konfiguriert ist, befestigt und mit einer der Säulen (3) gekoppelt zu werden; das Paar der oberen Verbindungen (4A) und das Paar der unteren Verbindungen (4B) mit einem Stellungsbeibehaltungsmechanismus (46) versehen ist, wobei der Stellungsbeibehaltungsmechanismus (46) konfiguriert ist, das Paar der oberen Verbindungen (4A) und das Paar der unteren Verbindungen (4B) in einer Stellung zu halten, um am Säulenpaar (3) befestigt zu werden; und
der Stellungsbeibehaltungsmechanismus (46) ein Paar von Zugstäben (57) aufweist, wobei jeder Zugstab (57) am entsprechenden unteren Verbindungshauptkörper (44) befestigt ist,
wobei die Zugstäbe (57) konfiguriert sind, von den vorgegebenen Stellen entfernt zu werden, wo die Zugstäbe (57) durch die unteren Verbindungshauptkörper (44) gehalten werden, so dass erste Enden der Zugstäbe (57) an den unteren Verbindungshauptkörpern (44) befestigt sind und die anderen Enden an Behälterhalterungen oder behälterseitigen Verbindungen (51) des Behälters (5) befestigt sind, wobei die Behälterhalterungen im Wesentlichen den Behälterhauptkörper halten und als die behälterseitigen Verbindungen dienen, wobei jede der behälterseitigen Verbindungen als jede der Behälterhalterungen dient,
wobei jeder der Zugstäbe (57) konfiguriert ist, den entsprechenden unteren Verbindungshauptkörper (44) in einer Stellung zu halten, um an den Säulen (3) befestigt zu werden.

2. Aufsitzmäher nach Anspruch 1, wobei
jeder der ersten Kopplungsteile (41a, 43a) der oberen Befestigungswinkel (41) und der unteren Befestigungswinkel (43) eine Montageführung (48) aufweist, die eine Aufnahmeöffnung aufweist, die konfiguriert ist, eine der Säulen (3) aufzunehmen, und
der Stellungsbeibehaltungsmechanismus (46) konfiguriert ist, jeden der ersten Kopplungsteile (41a, 43a) der oberen Befestigungswinkel (41) und der unteren Befestigungswinkel (43) so zu halten, dass jede Aufnahmeöffnung zur entsprechenden Säule (3) weist.

3. Aufsitzmäher nach Anspruch 1 oder 2, wobei
der obere Befestigungswinkel (41) einen zweiten Kopplungsteil (41b) aufweist, der konfiguriert ist, schwenkbar mit dem oberen Verbindungshauptkörper (42) gekoppelt zu werden,
der untere Befestigungswinkel (43) einen zweiten Kopplungsteil (43b) aufweist, der konfiguriert ist, schwenkbar mit dem unteren Verbindungshauptkörper (44) gekoppelt zu werden, und
der Stellungsbeibehaltungsmechanismus (46) einen Anschlag (46a) aufweist, wobei der Anschlag (46a) konfiguriert ist, die Schwenkung jedes oberen Befestigungswinkels (41) und jedes unteren Befestigungswinkels (43) um jede Schwenkachse jedes oberen Befestigungswinkels (41) und jedes unteren Befestigungswinkels (43) bezüglich jedes entsprechenden oberen Verbindungshauptkörpers (42) bzw. jedes entsprechenden unteren Verbindungshauptkörper (44) zu begrenzen.

4. Aufsitzmäher nach Anspruch 3, wobei der Stellungsbeibehaltungsmechanismus (46) ferner einen Verriegelungsbolzen (46c) aufweist, wobei der Verriegelungsbolzen (46c) konfiguriert ist, in jeden unteren Verbindungshauptkörper (44) eingesetzt zu werden, so dass jeder untere Verbindungshauptkörper (44) bezüglich des Grasbehälters (5) befestigt ist.

5. Aufsitzmäher nach Anspruch 3 oder 4, wobei der Stellungsbeibehaltungsmechanismus (46) ferner einen Verriegelungsbolzen (46c) aufweist, wobei der Verriegelungsbolzen (46c) konfiguriert ist, in jeden oberen Verbindungshauptkörper (42) eingesetzt zu werden, so dass jeder obere Verbindungshauptkörper (42) bezüglich des Grasbehälters (5) befestigt ist.

6. Aufsitzmäher nach einem der Ansprüche 3 bis 5, wobei der Stellungsbeibehaltungsmechanismus (46) ferner einen Abstandhalter (46b) aufweist, wobei der Abstandhalter (46b) konfiguriert ist, eine Lücke zwischen dem oberen Verbindungshauptkörper (42) und dem unteren Verbindungshauptkörper (44) aufrechtzuerhalten, die einander entsprechen.

7. Aufsitzmäher nach einem der Ansprüche 1 bis 6, der ferner ein Paar Kolbenzylinder (54) aufweist, die konfiguriert sind, den an den Säulen (3) befestigten Verbindungsmechanismus (4) anzuheben,
wobei das Paar der Zugstäbe (57) konfiguriert ist, das Paar der Kolbenzylinder (54) in deren maximal ausgefahrenen Positionen zu halten.

8. Aufsitzmäher nach einem der Ansprüche 1 bis 7, der ferner ein Paar Kolbenzylinder (54) aufweist, die konfiguriert sind, den an den Säulen (3) befestigten Verbindungsmechanismus (4) anzuheben, wobei ein erstes Ende von jedem Kolbenzylinder (54) abnehmbar mit dem Verbindungsmechanismus (4) gekoppelt ist, und ein zweites Ende von jedem Kolbenzylinder (54) schwenkbar mit dem Fahrzeugaufbaurahmen (1) oder einer der Säulen (3) gekoppelt ist.

9. Aufsitzmäher nach Anspruch 8, wobei das Paar der Kolbenzylinder (54) so konfiguriert ist, dass das erste Ende von jedem Kolbenzylinder (54) über einen ersten Haltebolzen (55p) abnehmbar und schwenkbar mit den Verbindungsmechanismen (4) gekoppelt ist, und das zweite Ende von jedem Kolbenzylinder (54) über einen zweiten Haltebolzen (56p) schwenkbar mit dem Fahrzeugaufbaurahmen (1) oder den Säulen (3) gekoppelt ist, wobei das Paar der Kolbenzylinder (54) ferner einen Freigabemechanismus (56a, 56b) aufweist, der konfiguriert ist, Positionsänderungen des zweiten Haltebolzens (56p) zu ermöglichen.

## Revendications

1. Tondeuse autoportée, comprenant :
un châssis de caisse (1) supporté de manière amovible par les roues avant (2a) et les roues arrière (2b) ;
un poste de conduite (20) disposé au-dessus du châssis de caisse (1), ledit poste de conduite (20) étant pourvu d'un siège de conducteur (21) ;
une paire de montants (3) fixés au châssis de caisse (1), ladite paire de montants (3) s'étendant vers le haut, vers un espace au-dessus du siège de conducteur (21), lesdits montants (3) étant espacés l'un de l'autre dans le sens de la largeur du châssis de caisse (1) ; et
un mécanisme de liaison (4) pourvu d'une paire de barres de liaison supérieures (4A) et d'une paire de barres de liaison inférieures (4B), chaque barre de liaison supérieure (4A) et chaque barre de liaison inférieure (4B) étant individuellement fixée de manière amovible à un des montants (3) ; et
un conteneur d'herbe (5) maintenu par le mécanisme de liaison (4) et composé d'une corps principal (50) de conteneur,
où
chaque barre de liaison supérieure (4A) comporte un corps principal (42) de barre de liaison supérieure, et
chaque barre de liaison inférieure (4B) comporte un corps principal (44) de barre de liaison inférieure,
**caractérisée en ce que** :
chaque barre de liaison supérieure (4A) comporte en outre un support de montage supérieur (41) ;
le support de montage supérieur (41) étant prévu pour raccorder le corps principal (42) de barre de liaison supérieure à un des montants (3),
le support de montage supérieur (41) ayant une première partie d'accouplement (41a) prévue pour être fixée et raccordée à un des montants (3) ;
chaque barre de liaison inférieure (4B) comporte en outre un support de montage inférieur (43) ;
le support de montage inférieur (43) étant prévu pour raccorder le corps principal (44) de barre de liaison inférieure à un des montants (3),
le support de montage inférieur (43) ayant une première partie d'accouplement (43a) prévue pour être fixée et raccordée à un des montants (3) ;
la paire de barres de liaison supérieures (4A) et la paire de barres de liaison inférieures (4B) sont dotées d'un mécanisme de maintien de position (46), ledit mécanisme de maintien de position (46) étant prévu pour maintenir la paire de barres de liaison supérieures (4A) et la paire de barres de liaison inférieures (4B) dans une position de fixation à la paire de montants (3) ; et
le mécanisme de maintien de position (46) comprend une paire de barres de tension (57), chaque barre de tension (57) étant fixée au corps principal (44) de barre de liaison inférieure correspondant,
les barres de tension (57) étant prévues pour être ôtées des emplacements prédéfinis où les barres de tension (57) sont maintenues par les corps principaux (44) de barre de liaison inférieure, de telle manière que les premières extrémités des barres de tension (57) sont fixées aux corps principaux (44) de barre de liaison inférieure et les autres extrémités sont fixées à des supports de conteneur ou des attaches latérales (51) du container (5), les supports de conteneur supportant principalement le corps principal de conteneur et servant d'attaches latérales du conteneur, chaque attache latérale du conteneur servant de support individuel de conteneur,
chaque barre de tension (57) étant prévue pour maintenir le corps principal (44) de barre de liaison inférieure correspondant dans une position de fixation aux montants (3) .

2. Tondeuse autoportée selon la revendication 1, où
chaque première partie d'accouplement (41a, 43a) des supports de montage supérieurs (41) et des supports de montage inférieurs (43) comporte un guidage de montage (48) ayant une ouverture de réception prévue pour recevoir un des montants (3), et
le mécanisme de maintien de position (46) est prévu pour maintenir chaque première partie d'accouplement (41a, 43a) des supports de montage supérieurs (41) et des supports de montage inférieurs (43) de telle manière que chaque ouverture de réception soit opposée au montant (3) correspondant.

3. Tondeuse autoportée selon la revendication 1 ou la revendication 2, où
le support de montage supérieur (41) a une deuxième partie d'accouplement (41b) prévue pour être raccordée de manière oscillante au corps principal (42) de barre de liaison supérieure,
le support de montage inférieur (43) a une deuxième partie d'accouplement (43b) prévue pour être raccordée de manière oscillante au corps principal (44) de barre de liaison inférieure, et
le mécanisme de maintien de position (46) a une butée (46a), ladite butée (46a) étant prévue pour limiter l'oscillation de chaque support de montage supérieur (41) et de chaque support de montage inférieur (43) autour de chaque axe d'oscillation de chaque support de montage supérieur (41) et de chaque support de montage inférieur (43) respectivement par rapport à chaque corps principal (42) de barre de liaison supérieure correspondant et à chaque corps principal (44) de barre de liaison inférieure correspondant.

4. Tondeuse autoportée selon la revendication 3, où le mécanisme de maintien de position (46) comprend en outre une broche de verrouillage (46c), ladite broche de verrouillage (46c) étant prévue pour être insérée dans chaque corps principal (44) de barre de liaison inférieure de manière à fixer chaque corps principal (44) de barre de liaison inférieure par rapport au conteneur d'herbe (5).

5. Tondeuse autoportée selon la revendication 3 ou la revendication 4, où le mécanisme de maintien de position (46) comprend en outre une broche de verrouillage (46c), ladite broche de verrouillage (46c) étant prévue pour être insérée dans chaque corps principal (42) de barre de liaison supérieure de manière à fixer chaque corps principal (42) de barre de liaison supérieure par rapport au conteneur d'herbe (5).

6. Tondeuse autoportée selon l'une des revendications 3 à 5, où le mécanisme de maintien de position (46) comprend en outre un écarteur (46b), ledit écarteur (46b) étant prévu pour maintenir un espacement entre le corps principal (42) de barre de liaison supérieure et le corps principal (44) de barre de liaison inférieure qui se correspondent.

7. Tondeuse autoportée selon l'une des revendications 1 à 6, comprenant en outre une paire de cylindres de piston (54) prévus pour élever le mécanisme de liaison (4) fixer aux montants (3),
ladite paire de barres de tension (57) étant prévue pour maintenir la paire de cylindres de piston (54) en position d'extension maximale de ceux-ci.

8. Tondeuse autoportée selon l'une des revendications 1 à 7, comprenant en outre une paire de cylindres de piston (54) prévus pour élever le mécanisme de liaison (4) fixé aux montants (3), une première extrémité de chaque cylindre de piston (54) étant raccordée de manière amovible au mécanisme de liaison (4), et une deuxième extrémité de chaque cylindre de piston (54) étant raccordée de manière oscillante au châssis de caisse (1) ou à un des montants (3) .

9. Tondeuse autoportée selon la revendication 8, où la paire de cylindres de piston (54) est prévue de telle manière que la première extrémité de chaque cylindre de piston (54) est raccordée de manière amovible et oscillante aux mécanismes de liaison (4) par une première broche de support (55p), et la deuxième extrémité de chaque cylindre de piston (54) est raccordée de manière oscillante au châssis de caisse (1) ou aux montants (3) par une deuxième broche de support (56p), la paire de cylindres de piston (54) comportant en outre un mécanisme de commutation (56a, 56b) prévu pour permettre un changement de position de la deuxième broche de support (56p) .
